# EUROPÄISCHE PATENTANMELDUNG

(11) **EP 4 838 322 A1**
(43) Veröffentlichungstag der Anmeldung: **11.11.2026**
(21) Anmeldenummer: 25174551.9
(22) Anmeldetag: 06.05.2025
(51) Int. Cl.: G05B 19/418, H01R 43/28, H02G 1/12

(54) **KABELBEARBEITUNGSVORRICHTUNG**

(71) Anmelder: Schleuniger AG, 3608 Thun (CH)
(72) Erfinder: Schneider, Timan, 3612 Steffisburg (CH)
(74) Vertreter: Zimmermann & Partner Patentanwälte mbB

(57) **Zusammenfassung**

Die Erfindung betrifft eine Kabelbearbeitungsvorrichtung (100) zum Bearbeiten einer Kabelanordnung mit einer Mehrzahl von Teilkabeln für eine vorgegebene Anwendung, wobei jedes der Teilkabel ein jeweiliges Teilkabel-spezifische Farbe aufweist, wobei die Kabelbearbeitungsvorrichtung ein Bearbeitungswerkzeug (250), einen optischen Sensor (22) zum Detektieren der jeweiligen Farbe und eine Steuerung (200) zum Steuern des Bearbeitungswerkzeuges aufweist. Die Steuerung (200) weist eine Speichereinheit (210), eine Zuordnungseinheit (220) und eine Befehlseinheit (230) auf.

## Beschreibung

Die vorliegende Erfindung betrifft eine Kabelbearbeitungsvorrichtung für die Bearbeitung von Teilkabeln einer Kabelanordnung.

Eine Kabelanordnung kann eine Vielzahl von Teilkabeln aufweisen. Die Kabelanordnung kann beispielsweise ein Kabelbündel oder ein Mehrfachkernkabel sein. Für die weitere Verwendung der Kabelanordnung kann es erforderlich sein, dass einzelnen Teilkabel teilkabelspezifisch bearbeitet, beispielsweise abisoliert, werden. Die einzelnen Teilkabel der Kabelanordnung können also unterschiedlich bearbeitet werden.

Damit die Kabelanordnung genutzt werden kann, muss sichergestellt sein, dass alle Teilkabel gemäß den teilkabelspezifischen Vorgaben bearbeitet werden. Ein mögliches Verfahren sieht vor, dass eine bestimmte Reihenfolge der einzelnen Teilkabel vorgegeben ist und der Nutzer die Teilkabel gemäß der vorgegebenen Reihenfolge einer Bearbeitungsmaschine zuführt. Ein solches Verfahren ist fehleranfällig und wenig nutzerfreundlich, da es eine hohe Konzentration des Nutzers erfordert. Ein fehlerhaftes Bearbeiten zumindest eines der Teilkabel führt zu einem Ausschuss des Materials.

Es besteht daher der Bedarf an einer Kabelbearbeitungsvorrichtung zur Bearbeitung von Teilkabeln einer Kabelanordnung, die präzise und nutzerfreundlich ist und die Produktion von Ausschuss reduziert. Ebenfalls besteht Bedarf an einer entsprechenden Methode.

Die Aufgabe wir gelöst durch die Kabelbearbeitungsvorrichtung nach Anspruch 1 und die Methode zur Kabelbearbeitung nach Anspruch 13. Vorteilhafte Ausgestaltungen sind in den Unteransprüchen angegeben.

Ein erster Aspekt der Erfindung betrifft eine Kabelbearbeitungsvorrichtung zum Bearbeiten einer Kabelanordnung mit einer Mehrzahl von Teilkabeln für eine vorgegebene Anwendung, wobei jedes der Teilkabel ein jeweiliges Teilkabel-spezifische Farbe aufweist. Dabei weist die Kabelbearbeitungsvorrichtung ein Bearbeitungswerkzeug zum sequenziellen Ausführen jeweiliger Bearbeitungsschritte an den Teilkabeln auf. Weiterhin weist die Kabelbearbeitungsvorrichtung einen optischen Sensor auf, wobei der optische Sensor zum Detektieren der jeweiligen Farbe eines dem Bearbeitungswerkzeug, insbesondere in eine Bearbeitungsposition, zugeführten Teilkabels aus der Mehrzahl der Teilkabel ausgebildet ist. Die Kabelbearbeitungsvorrichtung weist weiterhin eine Steuerung zum Steuern des Bearbeitungswerkzeuges auf, wobei die Steuerung aufweist:
- eine Speichereinheit, in der mindestens ein Bearbeitungsrezept für die Bearbeitung der Kabelanordnung gespeichert ist, wobei das Bearbeitungsrezept eine Mehrzahl Teilrezepte mit jeweils mindestens einem Bearbeitungsschritt enthält, wobei jedem Teilkabel ein jeweiliges Teilrezept zugeordnet ist und wobei die Teilrezepte einen den Bearbeitungsschritt parametrisierenden Bearbeitungsparameter enthalten,
- eine Zuordnungseinheit, wobei die Zuordnungseinheit mit dem optischen Sensor verbunden ist, um eine Sensorinformation bezüglich der detektierten Farbe zu empfangen, in Abhängigkeit der empfangenen Sensorinformation das dem Bearbeitungswerkzeug, insbesondere der Bearbeitungsposition, zugeführte Teilkabel zu erkennen, und das dem zugeführten Teilkabel zugeordnete Teilrezept auszuwählen, und
- eine Befehlseinheit, wobei die Befehlseinheit mit der Zuordnungseinheit gekoppelt ist, um den Bearbeitungsschritt des ausgewählten Teilrezeptes zu empfangen, und mit dem Bearbeitungswerkzeug gekoppelt ist, um das Bearbeitungswerkzeug zum Ausführen des Bearbeitungsschrittes des ausgewählten Teilrezeptes an dem erkannten zugeführten Teilkabel zu steuern.

Die Kabelbearbeitungsvorrichtung kann eine Abisoliermaschine sein. Die Kabelbearbeitungsvorrichtung kann eine Bench Top Maschine sein. Die zu bearbeitende Kabelanordnung kann zuvor auf einem anderen Maschinentyp auf eine bestimmte Länge abgelängt werden, z. B. ab Kabelrolle. Die Kabelbearbeitungsvorrichtung, beispielsweise die Abisoliermaschine kann genutzt werden, um die beiden Kabelenden zu bearbeiten.

Die Kabelbearbeitungsvorrichtung kann zum Einschneiden einer Kabelschicht, zum Abisolieren des Außenmantels, zum Abisolieren eines Innenleiters, zum Ablängen des Innenleiters, zum Teilabzug des Innenleitermantels, und/oder zum Durchtrennen eines Teilkabels der Kabelanordnung ausgebildet sein. Die Kabelbearbeitungsvorrichtung kann zum Einschneiden und/oder Abziehen verschiedener Schichten von Koaxialkabeln und/oder von Hochvoltkabeln ausgebildet sein.

Die Kabelanordnung kann beispielsweise ein Kabelbündel, ein Mehrfachkernkabel, ein mehradriges Kabel, ein Koaxialkabel, ein Flachbandkabel und/oder ein Hochvoltkabel sein.

Für eine vorgegebene Anwendung können die Teilkabel der Kabelanordnung unterschiedlich bearbeitet werden. Die vorgegebene Anwendung kann ein nachgelagerter Einbau der Kabelanordnung in ein System sein. Je nach Anforderungen des Systems kann eine spezifische Bearbeitung der Kabelanordnung, insbesondere ihrer Teilkabel erforderlich sein.

Die Teilkabel-spezifische Farbe eines bestimmten Teilkabels kann die Farbe des Mantels dieses bestimmten Teilkabels sein.

Die Kabelbearbeitungsvorrichtung kann eine Vielzahl an Bearbeitungswerkzeugen aufweisen.

Das Bearbeitungswerkzeug kann ein Messer aufweisen. Das Bearbeitungswerkzeug kann eine Vielzahl an Messern aufweisen. Das Bearbeitungswerkzeug kann eine Vielzahl an unterschiedlichen Messern aufweisen. Das Bearbeitungswerkzeug kann eine Vielzahl an gleichartigen Messern aufweisen. Das Bearbeitungswerkzeug kann einen Bearbeitungsraum aufweisen. Der Bearbeitungsraum kann zur Aufnahme des Teilkabels ausgebildet sein. Insbesondere kann das Bearbeitungswerkzeug derart ausgebildet sein, dass ein im Bearbeitungsraum angeordnetes Teilkabel durch die Messer bearbeitet werden kann. Die Messer können so ausgebildet sein, dass sie in Richtung des Teilkabels bewegbar sind.

Der Bearbeitungsraum kann sich entlang einer Längsrichtung erstrecken. Das Teilkabel kann entlang einer Einführrichtung, die entlang der Längsrichtung des Bearbeitungsraumes verlaufen kann, in das Bearbeitungswerkzeug einführbar und/oder ausführbar sein. Das Messer des Bearbeitungswerkzeuges kann senkrecht zur Längsrichtung des Bearbeitungsraum bewegbar sein.

In einer Ausführungsform kann das Messer entlang der Längsrichtung des Bearbeitungsraumes bewegbar sein. In einer Ausführungsform kann das Messer in Bezug zur Längsrichtung des Bearbeitungsraumes festgelegt sein.

Das Bearbeitungswerkzeug kann zum Einschneiden einer Kabelschicht, zum Abisolieren des Außenmantels, zum Abisolieren eines Innenleiters, zum Ablängen des Innenleiters, zum Teilabzug des Innenleitermantels, und/oder zum Durchtrennen eines Teilkabels der Kabelanordnung ausgebildet sein. Das Bearbeitungswerkzeug kann zum Einschneiden und/oder Abziehen verschiedener Schichten von Koaxialkabeln und/oder von Hochvoltkabeln ausgebildet sein.

Die Kabelbearbeitungsvorrichtung, insbesondere das Bearbeitungswerkzeug, kann zum sequentiellen Ausführen mehrerer Bearbeitungsschritte ausgebildet sein, insbesondere nacheinander an verschiedenen Teilkabeln derselben Kabelanordnung. Das Bearbeitungswerkzeug kann dazu ausgebildet sein, die Teilkabel der Kabelanordnung nacheinander gemäß den detektierten Farben zu bearbeiten.

Die Bearbeitungsschritte an verschiedenen Teilkabeln können unabhängig voneinander sein. In einer Ausführungsform kann ein bestimmtes Teilkabel bearbeitet werden, unabhängig davon, ob bereits ein anderes Teilkabel zeitlich vor dem bestimmten Teilkabel bearbeitet wurde. In einer Ausführungsform kann das bestimmte Teilkabel bearbeitet werden, unabhängig davon, welcher Bearbeitungsschritt zeitlich zuvor an dem anderen Teilkabel durchgeführt wurde.

In einer Ausführungsform kann das Teilkabel durch das Bearbeitungswerkzeug bearbeitet werden, wenn dieses in dem Bearbeitungsraum angeordnet ist. In einer Ausführungsform kann das Teilkabel durch das Bearbeitungswerkzeug bearbeitet werden, wenn dieses in der Bearbeitungsposition angeordnet ist. Die Bearbeitungsposition kann eine Ausrichtung des Teilkabels in Relation zum Bearbeitungswerkzeug umfassen. In einer Ausführungsform kann die Kabelbearbeitungsvorrichtung einen Anschlag aufweisen. Der Anschlag kann derart angeordnet und ausgebildet sein, die Bearbeitungsposition anzuzeigen. In einer Ausführungsform ist der Anschlag derart angeordnet, dass das Teilkabel ihn berührt, wenn es in der Bearbeitungsposition angeordnet ist.

In einer Ausführungsform kann die Kabelbearbeitungsvorrichtung derart ausgebildet sein, dass die Bearbeitung des Teilkabels beginnt, wenn das Teilkabel den Anschlag berührt. In einer Ausführungsform kann die Kabelbearbeitungsvorrichtung derart ausgebildet sein, dass die Detektion der Farbe des Teilkabels beginnt, wenn das Teilkabel den Anschlag berührt.

In einer Ausführungsform weist die Kabelbearbeitungsvorrichtung einen Kabelgreifer auf. Der Kabelgreifer kann kommunikativ mit dem Anschlag verbunden sein. In einer Ausführungsform greift der Kabelgreifer das Teilkabel, wenn dieses am Anschlag angeordnet ist, insbesondere in der Bearbeitungsposition angeordnet ist.

In einer Ausführungsform kann der Kabelgreifer derart angeordnet und ausgebildet sein, dass seine Position im Bezug zur Längsrichtung des Bearbeitungsraumes festgelegt ist. Der Kabelgreifer kann im Bezug zur Längsrichtung des Bearbeitungsraumes eine festgelegte Position haben, die während der Bearbeitung der Kabelanordnung unveränderbar ist. In einer Ausführungsform kann der Kabelgreifer entlang der Längsrichtung des Bearbeitungsraumes bewegbar sein.

Der Kabelgreifer kann das Teilkabel so greifen, dass dieses während den Bearbeitungsschritten die Position, insbesondere die Bearbeitungsposition, beibehält.

Der Kabelgreifer und/oder das Messer können in Bezug zueinander bewegbar sein. In einer Ausführungsform weist die Kabelbearbeitungsvorrichtung einen ortsfesten Kabelgreifer und ein entlang der Längsrichtung des Bearbeitungsraumes bewegbares Messer auf. In einer Ausführungsform weist die Kabelbearbeitungsvorrichtung ein ortsfestes Messer und einen entlang der Längsrichtung des Bearbeitungsraumes bewegbaren Kabelgreifer auf.

Das Bearbeitungswerkzeug kann dazu ausgebildet sein, jeweils genau ein Teilkabel zu bearbeiten. In einer Ausführungsform kann genau ein Teilkabel in dem Bearbeitungswerkzeug zur Bearbeitung angeordnet sein. Das Bearbeitungswerkzeug kann dazu ausgebildet sein, mehrere Teilkabel einzeln nacheinander zu bearbeiten.

Bei der Bearbeitung kann es beispielsweise um das Abisolieren des Außenmantels, gefolgt vom Abisolieren und gegebenenfalls Ablängen der Innenleiter, mit oder ohne Teilabzug gehen. Bei Koaxial- und Hochvoltkabeln können die verschiedenen Schichten eingeschnitten und abgezogen werden.

Die Farberkennung kann ein automatisches Erkennen der Farbe des Mantels, der Farbe der Isolation und/oder der Farbe einer Schicht eines eingelegten Teilkabels umfassen. So kann der korrekte Bearbeitungsprozess zugewiesen werden. Dies kann vorteilhaft sein, wenn z. B. die Teilkabel unterschiedlich verarbeitet werden sollen, wie beispielsweise bei einem Netzkabel, bei welchem der Erdungsleiter (ein bestimmtes Teilkabel) länger abisoliert werden soll als die anderen Teilkabel.

Der optische Sensor kann einen Farbsensor aufweisen. Der optische Sensor kann einen photoelektrischen Sensor aufweisen. Der optische Sensor kann dazu ausgebildet sein, Sensorinformationen bezüglich der empfangenen Lichtintensitäten und/oder Farbwerte bereitzustellen.

In einer Ausführungsform kann der optische Sensor derart ausgebildet und angeordnet sein, dass der Sensor die Farbe des Teilkabels beim Einführen des Teilkabels in die Kabelbearbeitungsvorrichtung detektieren kann, insbesondere während das Teilkabel in die Kabelbearbeitungsvorrichtung eingeführt wird. In einer Ausführungsform kann der optische Sensor derart ausgebildet und angeordnet sein, dass der Sensor die Farbe des Teilkabels detektieren kann, wenn das Teilkabel in der Kabelbearbeitungsvorrichtung angeordnet ist. In einer Ausführungsform kann der optische Sensor derart ausgebildet und angeordnet sein, dass der Sensor die Farbe des Teilkabels detektieren kann, wenn das Teilkabel in der Bearbeitungsposition angeordnet ist.

In einer Ausführungsform kann der optische Sensor derart ausgebildet und angeordnet sein, dass der Sensor die Farbe des Teilkabels beim Einführen des Teilkabels in das Bearbeitungswerkzeug detektieren kann, insbesondere während das Teilkabel in das Bearbeitungswerkzeug eingeführt wird. In einer Ausführungsform kann der optische Sensor derart ausgebildet und angeordnet sein, dass der Sensor die Farbe des Teilkabels detektieren kann, wenn das Teilkabel in dem Bearbeitungswerkzeug angeordnet ist.

In einer Ausführungsform kann der optische Sensor derart ausgebildet und angeordnet sein, dass der Sensor die Farbe des Teilkabels beim Einführen des Teilkabels in den Bearbeitungsraum detektieren kann, insbesondere während das Teilkabel in den Bearbeitungsraum eingeführt wird. In einer Ausführungsform kann der optische Sensor derart ausgebildet und angeordnet sein, dass der Sensor die Farbe des Teilkabels detektieren kann, wenn das Teilkabel in dem Bearbeitungsraum angeordnet ist.

Die Kabelbearbeitungsvorrichtung kann dazu ausgebildet sein, die Farbe des Teilkabels zu detektieren, wenn der optische Sensor und das Teilkabel relativ zueinander bewegt werden. Die Kabelbearbeitungsvorrichtung kann dazu ausgebildet sein, die Farbe des Teilkabels zu detektieren, während das Teilkabel am optischen Sensor vorbei in das Bearbeitungswerkzeug eingeführt wird. Die Kabelbearbeitungsvorrichtung kann dazu ausgebildet sein, die Farbe des Teilkabels zu detektieren, während sich der optische Sensor am Teilkabel entlang bewegt.

Die Steuerung kann die Speichereinheit, die Zuordnungseinheit und die Befehlseinheit aufweisen. Die Speichereinheit, die Zuordnungseinheit und die Befehlseinheit können Untereinheiten der Steuerung sein.

Die Speichereinheit und die Zuordnungseinheit können kommunikativ verbunden sein. Die Speichereinheit und die Befehlseinheit können kommunikativ verbunden sein. Die Zuordnungseinheit und die Befehlseinheit können kommunikativ verbunden sein. Die Speichereinheit, die Zuordnungseinheit und die Befehlseinheit können kommunikativ verbunden sein.

Die Steuerung kann zumindest einen Prozessor aufweisen. Der Prozessor kann zur Ausführung der Schritte durch die Speichereinheit und/oder durch die Zuordnungseinheit und/oder der Befehlseinheit ausgebildet sein.

Der Prozessor kann konfiguriert sein, um mittels der Speichereinheit, mindestens ein Bearbeitungsrezept für die Bearbeitung der Kabelanordnung zu speichern, wobei das Bearbeitungsrezept eine Mehrzahl Teilrezepte mit jeweils mindestens einem Bearbeitungsschritt enthält, wobei jedem Teilkabel ein jeweiliges Teilrezept zugeordnet ist und wobei die Teilrezepte einen den Bearbeitungsschritt parametrisierenden Bearbeitungsparameter enthalten, um mittels der Zuordnungseinheit, eine Sensorinformation bezüglich der detektierten Farbe zu empfangen, in Abhängigkeit der empfangenen Sensorinformation das dem Bearbeitungswerkzeug, insbesondere der Bearbeitungsposition, zugeführte Teilkabel zu erkennen, und das dem zugeführten Teilkabel zugeordnete Teilrezept auszuwählen, und um mittels der Befehlseinheit den Bearbeitungsschritt des ausgewählten Teilrezeptes zu empfangen, und um das Bearbeitungswerkzeug zum Ausführen des Bearbeitungsschrittes des ausgewählten Teilrezeptes an dem erkannten zugeführten Teilkabel zu steuern.

Der Prozessor kann dazu konfiguriert sein, die Schritte durch die Speichereinheit und/oder durch die Zuordnungseinheit und/oder der Befehlseinheit auszuführen. Die Steuerung kann einen Speicher aufweisen. Die Steuerung kann mit einem externen Speicher kommunikativ verbunden sein.

In der Speichereinheit kann zumindest ein Bearbeitungsrezept für die Bearbeitung einer bestimmten Kabelanordnung gespeichert sein. Das Bearbeitungsrezept kann für jedes Teilkabel der bestimmten Kabelanordnung jeweilige zugehörige Teilrezepte umfassen. Jedes Teilrezept kann jeweils zumindest einen Bearbeitungsparameter enthalten. Jedes Teilrezept kann j eweilige Bearbeitungsparameter enthalten, die den Bearbeitungsschritt des zugehörigen Teilkabels und/oder die Bearbeitungsschritte des zugehörigen Teilkabels parametrisieren. Jedes Teilrezept kann Informationen zu mindestens einem Bearbeitungsschritt für das jeweilige Teilkabel enthalten. Die zu verschiedenen Teilkabeln zugehörigen Teilrezepte können unterschiedliche Bearbeitungsschritte beschreiben. Die zu verschiedenen Teilkabeln zugehörigen Teilrezepte können unterschiedliche Anzahlen Bearbeitungsparametern umfassen. Beispielsweise könnte das Teilrezept eines ersten Teilkabels genau einen Bearbeitungsparameter aufweisen, und das Teilrezept eines zweiten Teilkabels zumindest zwei Bearbeitungsparameter.

Das jeweilige Teilrezept kann zumindest einen Bearbeitungsparameter enthalten, wobei der Bearbeitungsparameter den Bearbeitungsschritt parametrisiert. Der Bearbeitungsparameter kann spezifisch für den jeweiligen Bearbeitungsschritt sein. Der Bearbeitungsparameter kann den zugehörigen Bearbeitungsschritt charakterisieren. Beispielsweise kann der Bearbeitungsparameter angeben, an welcher Position (beispielsweise in Bezug zur Kabelspitze) der Mantel eingeschnitten werden soll. Beispielsweise kann der Bearbeitungsparameter angeben, wie tief der Mantel eingeschnitten werden soll. In einer Ausführungsform charakterisiert genau ein Bearbeitungsparameter den zugehörigen Bearbeitungsschritt. In einer Ausführungsform charakterisiert eine Vielzahl an Bearbeitungsparameter den zugehörigen Bearbeitungsschritt. Der Bearbeitungsschritt kann durch eine festgelegte Parameterkombination, die mehrere Bearbeitungsparameter umfasst, parametrisiert werden.

Jeder Bearbeitungsschritt jedes Teilkabels der Kabelanordnung kann parametrisiert sein.

Die Zuordnungseinheit kann mit dem optischen Sensor in Verbindung stehen. Die Zuordnungseinheit kann kommunikativ mit dem optischen Sensor verbunden sein.

Die Zuordnungseinheit kann auf die Teilrezepte, gespeichert in der Speichereinheit zugreifen, um das dem zugeführten Teilkabel zugeordnete Teilrezept auszuwählen. Die Zuordnungseinheit kann die Teilrezepte empfangen, um das dem zugeführten Teilkabel zugeordnete Teilrezept auszuwählen.

Die Zuordnungseinheit kann zum automatischen Erkennen des Teilkabels ausgebildet sein. Die Zuordnungseinheit kann zum automatischen Auswählen des zugeordneten Teilrezeptes ausgebildet sein. Die Zuordnungseinheit kann zum automatischen Erkennen des Teilkabels und zum automatischen Auswählen des zugeordneten Teilrezeptes ausgebildet sein.

Das zugeordnete Teilrezept kann aus einer Vielzahl an Teilrezepten ausgewählt werden. Das zugeordnete Teilrezept kann aus einer Vielzahl an Teilrezepten für die vorgegebene Anwendung ausgewählt werden.

Die Kabelbearbeitungsvorrichtung kann dazu eingerichtet sein, dass anhand der empfangenen Sensorinformation das entsprechende Teilkabel identifiziert und das zugehörige Teilrezept mit den zugehörigen Bearbeitungsparametern aus einer Vielzahl an Teilrezepten ausgewählt wird.

In einer Ausführungsform kann die empfangene Sensorinformation mit einem Farbeintrag der Teilrezepte verglichen werden. Das Teilkabel, dessen Farbeintrag mit der empfangenen Sensorinformation korrespondiert, kann zugeordnet und das zugehörige Teilrezept aus der Vielzahl an Teilrezepten ausgewählt werden.

Die Kabelbearbeitungsvorrichtung, insbesondere die Steuerung kann derart ausgebildet sein, dass der jeweilige nächste Bearbeitungsschritt durch das jeweilige erkannte Teilkabel bestimmt wird. In einer Ausführungsform ist insbesondere keine Reihenfolge der Bearbeitungsschritte und/oder Reihenfolge der Teilkabel für die Bearbeitung der Kabelanordnung vorgegeben.

Das Rezept kann die verschiedenen Bearbeitungsschritte für die verschiedenen Teilkabel in jeweiligen Teilrezepten umfassen, die mit diesem Rezept assoziiert sind. In einer Ausführungsform ist in dem Rezept keine Bearbeitungsreihenfolge der Teilkabel vorgegeben.

Die Befehlseinheit kann kommunikativ mit der Zuordnungseinheit verbunden sein. Die Befehlseinheit kann kommunikativ mit dem Bearbeitungswerkzeug verbunden sein.

Die Befehlseinheit kann zum Empfangen von Daten von der Zuordnungseinheit ausgebildet sein. Die Befehlseinheit kann einen Dateneingang aufweisen. Die Befehlseinheit kann einen Datenempfänger aufweisen.

Die Befehlseinheit kann zum Steuern des Bearbeitungswerkzeuges ausgebildet sein. Die Befehlseinheit kann einen Steuerdatenausgang aufweisen. Die Befehlseinheit kann einen Steuerdatensender aufweisen. Das Bearbeitungswerkzeug kann einen korrespondierenden Steuerdatenempfänger aufweisen. Der Steuerdatensender kann kommunikativ mit dem Steuerdatenempfänger verbunden sein.

In einer Ausführungsform kann die Kabelbearbeitungsvorrichtung dazu eingerichtet sein, das in den Bearbeitungsraum eingeführte Teilkabel zu erkennen, das zugehörige Teilrezept auszuwählen und das Teilkabel dementsprechend zu bearbeiten, ohne dass das Teilkabel zwischen dem Erkennen und der Bearbeitung aus dem Bearbeitungsraum ausgeführt wird.

Ein Vorteil kann sein, dass anhand des Teilkabels das Teilrezept ausgewählt wird, das zu dem zu diesem Zeitpunkt im Bearbeitungsraum befindliche Teilkabel assoziiert ist. Der Bearbeitungsprozess kann vorteilhaft vereinfacht werden. Ein Vorteil kann sein, dass der Nutzer keine vorgegebene Reihenfolge des Einführens der Teilkabel befolgen muss, sondern die Teilkabel in beliebiger Reihenfolge der Kabelbearbeitungsvorrichtung zur Bearbeitung zuführen kann. Fehler durch den Nutzer können vorteilhaft reduziert werden. Die Produktion von Ausschuss kann reduziert werden, wodurch Material gespart und/oder Kosten reduziert werden können.

Ein Vorteil kann sein, dass der Bearbeitungsprozess beschleunigt sein kann. Eine Fehlerausgabe, wenn Teilkabel nicht in der vorgegebenen Reihenfolge eingeführt werden, kann verhindert sein, da die Teilkabel in beliebiger Reihenfolge eingeführt und bearbeitet werden können. Verzögerungen durch Abweichungen von einer vorgegebenen Reihenfolge können verhindert werden. Die Bearbeitungszeit und damit die Kosten können vorteilhaft reduziert werden.

Die Kabelbearbeitungsvorrichtung kann dazu ausgebildet sein, dass die Zuordnungsreihenfolge der Teilrezepte durch die Reihenfolge des Einführens der Teilkabel in das Bearbeitungswerkzeug generiert wird. Die Zuordnungsreihenfolge kann für jede neue Kabelanordnung neu anhand der Reihenfolge des Einführens der Teilkabel in das Bearbeitungswerkzeug generiert werden.

Die Kabelbearbeitungsvorrichtung kann dazu ausgebildet sein, dass die Zuordnungsreihenfolge der Teilrezepte durch die Reihenfolge des Erkennens der Teilkabel generiert wird. Die Zuordnungsreihenfolge kann für jede neue Kabelanordnung neu anhand der Reihenfolge des Erkennens der Teilkabel generiert werden. In einer Ausführungsform erfordert das Generieren der Zuordnungsreihenfolge nicht, dass die Farben aller Teilkabel detektiert und alle Teilekabel erkannt werden, bevor das erste Teilkabel bearbeitet wird.

In einer Ausführungsform kann die Kabelbearbeitungsvorrichtung derart ausgebildet sein, dass nach dem Detektieren der Farbe und der Auswahl des Teilrezeptes, das zugehörige zugeführte Teilkabel bearbeitet wird. Dazu muss es nicht erforderlich sein, dass erst die Farben aller Teilkabel detektiert werden.

In einer Ausführungsform kann die Kabelbearbeitungsvorrichtung derart ausgebildet sein, dass die Farbe der Teilkabel kamerafrei detektiert wird. Die Farbe der Teilkabel kann mithilfe des optischen Sensors detektiert werden. In einer Ausführungsform kann die Kabelbearbeitungsvorrichtung derart ausgebildet sein, dass ohne eine Bildaufnahme vom Teilkabel die Farbe detektiert werden kann. Ein Vorteil kann sein, dass keine Bildanalyse erforderlich ist. Auf einfache Weise kann auf Basis der Sensordaten die Farbe des Teilkabels detektierbar sein.

Ein Vorteil kann sein, dass die Bearbeitung der Teilkabel anhand der Farbe des Teilkabels erfolgen kann. Die Farbe kann auf einfache Weise ermittelt werden, insbesondere ohne eine Bildanalyse.

Die Kabelbearbeitungsvorrichtung kann eine Abisoliervorrichtung sein. Die Kabelbearbeitungsvorrichtung kann eine Trenn- und Abisoliervorrichtung sein. Die Kabelbearbeitungsvorrichtung kann einen Abisolierkopf aufweisen.

In einer Ausführungsform können die Teilkabel nacheinander per Hand dem Bearbeitungswerkzeug zugeführt werden. Nachdem ein erstes Teilkabel erkannt und gemäß dem zugehörigen (anhand der Farbe zugeordneten) ersten Teilrezept bearbeitet wurde, kann das bearbeitete erste Teilkabel aus dem Bearbeitungswerkzeug entfernt werden. Ein anderes, zweites Teilkabel kann dem Bearbeitungswerkzeug zugeführt werden und gemäß dem zugehörigen, anhand der Farbe zugeordneten, zweiten Teilrezept, bearbeitet werden.

In einer Ausführungsform kann jedes Teilkabel der Kabelbearbeitungsvorrichtung zur Bearbeitung zugeführt werden, bevor die jeweilige Farbe des Teilkabels erkannt wurde. Die Kabelbearbeitungsvorrichtung kann derart ausgebildet sein, das Teilkabel entsprechend dem zugehörigen Teilrezept zu bearbeiten, sofort nachdem die Farbe des Teilkabels detektiert und das Teilrezept für das Teilkabel ausgewählt ist.

In einer Ausführungsform kann die Kabelbearbeitungsvorrichtung dazu ausgebildet sein, eine Kabelanordnung mit zwei Teilkabeln zu bearbeiten. In einer Ausführungsform kann die Kabelbearbeitungsvorrichtung dazu ausgebildet sein, eine Kabelanordnung mit drei Teilkabeln zu bearbeiten. In einer Ausführungsform kann die Kabelbearbeitungsvorrichtung dazu ausgebildet sein, eine Kabelanordnung mit vier Teilkabeln zu bearbeiten. In einer Ausführungsform kann die Kabelbearbeitungsvorrichtung dazu ausgebildet sein, eine Kabelanordnung mit mehr als vier Teilkabeln zu bearbeiten. In einer Ausführungsform kann die Kabelbearbeitungsvorrichtung dazu ausgebildet sein, eine Kabelanordnung mit mehr als sechs Teilkabeln zu bearbeiten.

In einer Ausführungsform kann die Kabelbearbeitungsvorrichtung derart ausgebildet sein, jedes erkannte Teilkabel im Anschluss an die Auswahl des Teilrezeptes entsprechend zu bearbeiten.

Ein Vorteil kann sein, dass die Schritte des Erkennens des Kabels und der Bearbeitung des Kabels durch dieselbe Vorrichtung erfolgen. Vorteilhaft kann die Anzahl der benötigten Bearbeitungsvorrichtungen reduziert sein. Vorteilhaft kann Platz eingespart werden.

In einer Ausführungsform kann die Speichereinheit dazu ausgebildet sein, eine Vielzahl an Bearbeitungsrezepten zu speichern. Insbesondere kann jedes Bearbeitungsrezept mit einer jeweiligen Anwendung assoziiert sein. In einer Ausführungsform kann das Bearbeitungsrezept für die vorgegebene Anwendung aus der Vielzahl an Bearbeitungsrezepten auswählbar sein. In einem Ausführungsbeispiel kann die Kabelbearbeitungsvorrichtung eine Nutzerschnittstelle umfassen, über die dem Nutzer die Vielzahl an Bearbeitungsrezepten angezeigt werden kann und über die der Nutzer das Bearbeitungsrezept für die vorgegebene Anwendung auswählen kann.

In einer Ausführungsform ist die Steuerung, insbesondere die Zuordnungseinheit, dazu ausgebildet, einem ersten Teilkabel ein erstes Teilrezept zuzuordnen zeitlich vor der Zuordnung eines zweiten Teilrezeptes zu einem zweiten Teilkabel, wenn das erste Teilkabel zeitlich vor dem zweiten Teilkabel in dem Bearbeitungswerkzeug, insbesondere in der Bearbeitungsposition, angeordnet ist, und dem zweiten Teilkabel das zweite Teilrezept zuzuordnen zeitlich vor der Zuordnung des ersten Teilrezeptes zu dem ersten Teilkabel, wenn das zweite Teilkabel zeitlich vor dem ersten Teilkabel in dem Bearbeitungswerkzeug, insbesondere in der Bearbeitungsposition, angeordnet ist.

In einer Ausführungsform ist die Steuerung, insbesondere die Zuordnungseinheit, dazu ausgebildet, einem ersten Teilkabel ein erstes Teilrezept zuzuordnen zeitlich vor der Zuordnung eines zweiten Teilrezeptes zu einem zweiten Teilkabel, wenn das erste Teilkabel zeitlich vor dem zweiten Teilkabel erkannt wird, und dem zweiten Teilkabel das zweite Teilrezept zuzuordnen zeitlich vor der Zuordnung des ersten Teilrezeptes zu dem ersten Teilkabel, wenn das zweite Teilkabel zeitlich vor dem ersten Teilkabel erkannt wird.

In einer Ausführungsform ist die Steuerung, insbesondere die Zuordnungseinheit, dazu ausgebildet, einem ersten Teilkabel ein erstes Teilrezept zuzuordnen zeitlich vor der Zuordnung eines zweiten Teilrezeptes zu einem zweiten Teilkabel, wenn die Farbe des ersten Teilkabel zeitlich vor der Farbe des zweiten Teilkabel detektiert ist, und dem zweiten Teilkabel das zweite Teilrezept zuzuordnen zeitlich vor der Zuordnung des ersten Teilrezeptes zu dem ersten Teilkabel, wenn die Farbe des zweiten Teilkabels zeitlich vor der Farbe des ersten Teilkabels detektiert ist.

Die Steuerung kann dazu ausgebildet sein, das erste Teilrezept zeitlich vor dem zweiten Teilrezept zuzuordnen, wenn die Farbe des ersten Teilkabels (erste Farbe) zeitlich vor der Farbe des zweiten Teilkabels (zweite Farbe) detektiert wird, und das zweite Teilrezept zeitlich vor dem ersten Teilrezept zuzuordnen, wenn die zweite Farbe zeitlich vor der ersten Farbe detektiert wird.

Ein Vorteil kann sein, dass der Nutzer die Teilkabel in einer beliebigen Reihenfolge in das Bearbeitungswerkzeug einführen kann, und den in beliebiger Reihenfolge eingeführten Teilkabeln jeweils das zugehörige Teilrezept zugeordnet werden kann. Die Bearbeitung von Kabelanordnungen kann vereinfacht werden, insbesondere da der Nutzer keine vorgegebene Reihenfolge befolgen muss. Produktionsfehler aufgrund fehlerhafter Abfolgen von Teilkabeln können reduziert werden. Die Bearbeitungsdauer kann vorteilhaft reduziert werden.

In einer Ausführungsform ist die Steuerung, insbesondere die Zuordnungseinheit dazu ausgebildet, das erste Teilrezept zeitlich vor dem zweiten Teilrezept auszuwählen, wenn das erste Teilkabel zeitlich vor dem zweiten Teilkabel in dem Bearbeitungswerkzeug, insbesondere in der Bearbeitungsposition, angeordnet ist, und das zweite Teilrezept zeitlich vor dem ersten Teilrezept auszuwählen, wenn das zweite Teilkabel zeitlich vor dem ersten Teilkabel in dem Bearbeitungswerkzeug, insbesondere in der Bearbeitungsposition, angeordnet ist.

In einer Ausführungsform ist die Steuerung, insbesondere die Zuordnungseinheit dazu ausgebildet, das erste Teilrezept zeitlich vor dem zweiten Teilrezept auszuwählen, wenn das erste Teilkabel zeitlich vor dem zweiten Teilkabel in das Bearbeitungswerkzeug eingeführt ist, und das zweite Teilrezept zeitlich vor dem ersten Teilrezept auszuwählen, wenn das zweite Teilkabel zeitlich vor dem ersten Teilkabel in das Bearbeitungswerkzeug eingeführt ist.

In einer Ausführungsform ist die Steuerung, insbesondere die Zuordnungseinheit dazu ausgebildet, das erste Teilrezept zeitlich vor dem zweiten Teilrezept auszuwählen, wenn das erste Teilkabel zeitlich vor dem zweiten Teilkabel erkannt wird, und das zweite Teilrezept zeitlich vor dem ersten Teilrezept auszuwählen, wenn das zweite Teilkabel zeitlich vor dem ersten Teilkabel erkannt wird.

In einer Ausführungsform ist die Steuerung dazu ausgebildet, das erste Teilrezept zeitlich vor dem zweiten Teilrezept auszuwählen, wenn die erste Farbe zeitlich vor der zweiten Farbe detektiert wird, und das zweite Teilrezept zeitlich vor dem ersten Teilrezept auszuwählen, wenn die zweite Farbe zeitlich vor der ersten Farbe detektiert wird.

Ein Vorteil kann sein, dass der Nutzer die Teilkabel in einer beliebigen Reihenfolge in das Bearbeitungswerkzeug einführen kann, und für die in beliebiger Reihenfolge eingeführten Teilkabeln jeweils das zugehörige Teilrezept ausgewählt werden kann. Die Bearbeitung von Kabelanordnungen kann vereinfacht werden, insbesondere da der Nutzer keine vorgegebene Reihenfolge befolgen muss. Produktionsfehler aufgrund fehlerhafter Abfolgen von Teilkabeln können reduziert werden. Die Bearbeitungsdauer kann vorteilhaft reduziert werden.

In einer Ausführungsform, ist die Kabelbearbeitungsvorrichtung dazu ausgebildet ein erstes Teilkabel mit einer ersten Farbe zeitlich vor einem zweiten Teilkabel mit einer zweiten Farbe zu bearbeiten, wenn die erste Farbe zeitlich vor der zweiten Farbe detektiert wird, und die Kabelbearbeitungsvorrichtung ist dazu ausgebildet, das zweite Teilkabel zeitlich vor dem ersten Teilkabel zu bearbeiten, wenn die zweite Farbe zeitlich vor der ersten Farbe detektiert wird, insbesondere das erste Teilkabel gemäß dem ersten Teilrezept und das zweite Teilkabel gemäß dem zweiten Teilrezept zu bearbeiten.

In einer Ausführungsform, kann die Kabelbearbeitungsvorrichtung dazu ausgebildet sein, das erste Teilkabel mit der ersten Farbe zeitlich vor dem zweiten Teilkabel mit einer zweiten Farbe zu bearbeiten, wenn die erste Farbe zeitlich vor der zweiten Farbe detektiert wird, insbesondere das erste Teilkabel zu bearbeiten, bevor die zweite Farbe detektiert wird, und das zweite Teilkabel zeitlich vor dem ersten Teilkabel zu bearbeiten, wenn die zweite Farbe zeitlich vor der ersten Farbe detektiert wird, insbesondere das zweite Teilkabel zu bearbeiten, bevor die erste Farbe detektiert wird.

Dabei kann die Kabelbearbeitungsvorrichtung dazu ausgebildet sein das erste Teilkabel gemäß dem ersten Teilrezept und das zweite Teilkabel gemäß dem zweiten Teilrezept zu bearbeiten.

Die Sequenz der jeweiligen Bearbeitungsschritte kann aus der Reihenfolge der detektierten Farben und der daraus resultierenden Reihenfolge der Teilrezepte generiert sein.

Ein Vorteil kann sein, dass der Nutzer die Teilkabel in einer beliebigen Reihenfolge in das Bearbeitungswerkzeug einführen kann, und die in beliebiger Reihenfolge eingeführten Teilkabel entsprechend der automatisch ausgewählten Teilrezepte bearbeitet werden. Die Bearbeitung von Kabelanordnungen kann vereinfacht werden, insbesondere da der Nutzer keine vorgegebene Reihenfolge befolgen muss. Produktionsfehler aufgrund fehlerhafter Abfolgen von Teilkabeln können reduziert werden. Die Bearbeitungsdauer kann vorteilhaft reduziert werden.

In einer Ausführungsform kann der Bearbeitungsparameter ein Rohmaterialparameter sein, der zumindest eine Eigenschaft des Teilkabels betrifft. In einer Ausführungsform, kann der Bearbeitungsparameter ein Rohmaterialparameter sein, der zumindest eine Eigenschaft des Teilkabels parametrisiert.

Der Rohmaterialparameter kann parametrisieren, wie das Teilkabel beschaffen ist und kann damit Hinweise geben, wie entsprechende Teilkabel durch das Bearbeitungswerkzeug bearbeitet werden kann.

Der Rohmaterialparameter kann ein Farbparameter, ein Leiteraufbau, ein Manteldurchmesser und/oder ein Leiterdurchmesser sein. Der Rohmaterialparameter kann eine Manteldicke sein. Der Rohmaterialparameter kann einen Mantelaufbau betreffen.

Der Farbparameter kann die Mantelfarbe des Teilkabels parametrisieren. Der Leiteraufbau kann Informationen zu Litzen und/oder Drähten umfassen. Diese können durch einen oder mehrere Leiteraufbauparameter parametrisiert sein.

In einer Ausführungsform umfasst jedes Teilrezept mindestens einen Rohmaterialparameter, insbesondere eine Vielzahl an Rohmaterialparametern, des jeweiligen zugehörigen Teilkabels.

In den Rezepten kann der Rohmaterialparameter für jede vorgegebene Anwendung identisch sein, wenn der Rohmaterialparameter das gleiche Teilkabel betrifft, insbesondere wenn die Farbe identisch ist. Die Rohmaterialparameter können von Artikel zu Artikel gleich bleiben, sofern derselbe Kabeltyp verwendet wird.

In einer Ausführungsform kann der Bearbeitungsparameter ein Verfahrensparameter sein, der zumindest eine allgemeine Bearbeitungseigenschaft des Teilkabels betrifft. In einer Ausführungsform kann der Bearbeitungsparameter ein Verfahrensparameter sein, der zumindest eine allgemeine Bearbeitungseigenschaft des Teilkabels parametrisiert.

Der Verfahrensparameter kann parametrisieren, wie das Teilkabel durch das Bearbeitungswerkzeug bearbeitet werden soll, beispielsweise welcher Abschnitt abisoliert werden soll.

Der Verfahrensparameter kann ein Abzugsdurchmesser, ein Einschnittsdurchmesser, eine Geschwindigkeit und/oder eine Beschleunigung sein.

Die Geschwindigkeit kann mit einem Geschwindigkeitsparameter beschrieben sein. Der Geschwindigkeitsparameter kann eine Abziehgeschwindigkeit, mit der ein Mantelrest vom Leiter abgezogen wird, betreffen.

Die Beschleunigung kann mit einem Beschleunigungsparameter beschrieben sein. Der Beschleunigungsparameter kann eine Abziehbeschleunigung, mit der ein Mantelrest vom Leiter abgezogen wird, betreffen.

Der Einschnittsdurchmesser kann mit einem Einschnittsdurchmesserparameter beschrieben sein. Der Einschnittsdurchmesserparameter kann beschreiben, wie tief der Mantel durch das Bearbeitungswerkzeug eingeschnitten wird.

In einer Ausführungsform umfasst jedes Teilrezept mindestens einen Verfahrensparameter, insbesondere eine Vielzahl an Verfahrensparametern, des jeweiligen zugehörigen Teilkabels.

In den Rezepten kann der Verfahrensparameter für jede vorgegebene Anwendung identisch sein, wenn der Verfahrensparameter das gleiche Teilkabel betrifft, insbesondere wenn die Farbe identisch ist. Die Verfahrensparameter können von Artikel zu Artikel gleich bleiben, sofern derselbe Kabeltyp verwendet wird.

In einer Ausführungsform kann der Bearbeitungsparameter ein Applikationsparameter sein, der zumindest eine anwendungsspezifische Bearbeitungseigenschaft des Teilkabels betrifft.

In einer Ausführungsform kann der Bearbeitungsparameter ein Applikationsparameter sein, der zumindest eine anwendungsspezifische Bearbeitungseigenschaft des Teilkabels parametrisiert.

Der Applikationsparameter kann eine Abisolierlänge, eine Abziehlänge und/oder eine Markierung sein.

In einer Ausführungsform umfasst jedes Teilrezept mindestens einen Bearbeitungsparameter, insbesondere eine Vielzahl an Bearbeitungsparametern, des jeweiligen zugehörigen Teilkabels.

Der Applikationsparameter kann für eine erste vorgegebene Anwendung verschieden von dem Applikationsparameter einer zweiten vorgegebenen Anwendung sein, wenn die Farbe identisch ist. Der Applikationsparameter kann für eine erste vorgegebene Anwendung identisch zu dem Applikationsparameter einer zweiten vorgegebenen Anwendung sein, wenn die Farbe identisch ist. Die Applikationsparameter können sich zwischen den Artikeln unterscheiden, da die Anwendungen verschieden sein können.

In einer Ausführungsform umfasst jedes Teilrezept mindestens einen Rohmaterialparameter, und einen Bearbeitungsparameter des jeweiligen zugehörigen Teilkabels.

In einer Ausführungsform umfasst jedes Teilrezept mindestens einen Rohmaterialparameter, und einen Verfahrensparameter des jeweiligen zugehörigen Teilkabels.

In einer Ausführungsform umfasst jedes Teilrezept mindestens einen Verfahrensparameter, und einen Bearbeitungsparameter des jeweiligen zugehörigen Teilkabels.

In einer Ausführungsform umfasst jedes Teilrezept mindestens einen Rohmaterialparameter, einen Verfahrensparameter und einen Bearbeitungsparameter des jeweiligen zugehörigen Teilkabels.

Die Bearbeitungsparameter können über eine Benutzeroberfläche in die Kabelbearbeitungsvorrichtung, insbesondere die Steuerung, eingegeben werden. Die Bearbeitungsparameter können in einem Speicher, beispielsweise einem externen Speicher, gespeichert sein, der mit der Steuerung kommunikativ verbunden ist. Über die Bearbeitungsparameter kann die Anwendung definiert sein.

In einer Ausführungsform kann die Zuordnungseinheit dazu ausgebildet sein, einen Vergleich zwischen der empfangenen Sensorinformation und den Farbeinträgen der Teilrezepte durchzuführen.

In einer Ausführungsform kann die Steuerung, insbesondere die Zuordnungseinheit, dazu ausgebildet sein für das Erkennen des Teilkabels, einen Vergleich zwischen der empfangenen Sensorinformation und den Farbeinträgen der Teilrezepte durchzuführen.

Der Vergleich kann über eine Berechnung der Abweichung, insbesondere über die kleinste quadratische Abweichung, erfolgen.

Die Zuordnungseinheit kann dazu ausgebildet sein, den Vergleich zu beenden, wenn eine Übereinstimmung gefunden wurde. Ein Vorteil kann sein, dass der Bearbeitungsprozess beschleunigt werden kann.

Eine derartige Konfiguration könnte in einer Ausführungsform genutzt werden, in der sich die Farben der Teilkabel stark unterscheiden.

Die Zuordnungseinheit kann dazu ausgebildet sein, den Vergleich für alle Teilrezepte durchzuführen. Die Zuordnungseinheit kann dazu ausgebildet sein, den Vergleich für alle Teilrezepte durchzuführen, und das Teilrezept zu wählen, das die beste Übereinstimmung zeigt. Ein Vorteil kann sein, dass die Zuordnung des Teilkabels verbessert werden kann.

Eine derartige Konfiguration könnte in einer Ausführungsform genutzt werden, in der sich die Farben der Teilkabel ähneln.

In einer Ausführungsform kann die Kabelbearbeitungsvorrichtung eine Benutzerausgabe aufweisen. Wenn die Steuerung eine Vielzahl an Teilrezepten auswählt, kann eine Ausgabe generiert und durch die Benutzerausgabe angezeigt werden. Beispielsweise könnte ausgegeben werden, das mehrere Teilrezepte ausgewählt sind. Der Nutzer könnte aufgefordert werden, eines der Teilrezepte der vorselektierten Teilmenge auszuwählen.

Ein Vorteil kann sein, dass eine Teilmenge an Teilrezepten durch die Kabelbearbeitungsmaschine ausgewählt wird und der Nutzer aus dieser auswählen kann. Nutzerfehler könnten durch die geringeren Auswahlmöglichkeiten reduziert werden.

In einer Ausführungsform können die Bedingungen des Vergleiches, beispielsweise des Beendens des Vergleiches, einstellbar sein. Ein Vorteil kann sein, dass der Nutzer die Kabelbearbeitungsmaschine auf einfache Weise an die Anforderungen der Bearbeitung unterschiedlicher Kabelanordnungen anpassen kann.

In einer Ausführungsform kann die Zuordnungseinheit dazu ausgebildet sein,
- wenn der Vergleich für einen der Farbeinträge eine Übereinstimmungsbedingung erfüllt, das zu diesem Farbeintrag zugehörige Teilrezept auszuwählen und der Befehlseinheit bereitzustellen, und
- wenn der Vergleich die Übereinstimmungsbedingung nicht erfüllt, insbesondere für keines der Teilrezepte, die Zuordnungseinheit eine Mitteilung generiert, wobei die Kabelbearbeitungsvorrichtung eine Benutzerausgabe aufweist, die zur Ausgabe der Mitteilung eingerichtet ist.

In einer Ausführungsform ist die Steuerung, insbesondere die Zuordnungseinheit, dazu ausgebildet,
- wenn der Vergleich für einen der Farbeinträge eine Übereinstimmungsbedingung erfüllt, das zu diesem Farbeintrag zugehörige Teilrezept auszuwählen und der Befehlseinheit bereitzustellen, so dass die Befehlseinheit das Bearbeitungswerkzeug gemäß dem Teilrezept steuert, um das Teilkabel entsprechend der detektierten Farbe zu bearbeiten, und
- wenn der Vergleich die Übereinstimmungsbedingung für keinen der Farbeinträge der Vielzahl der Teilrezepte erfüllt, die Zuordnungseinheit eine Mitteilung generiert, wobei die Kabelbearbeitungsvorrichtung eine Benutzerausgabe aufweist, die zur Ausgabe der Mitteilung eingerichtet ist.

Die Mitteilung kann eine optische Mitteilung sein, beispielsweise ein optisches Signal. Die Mitteilung kann eine akustische Mitteilung sein, beispielsweise ein Warnton. Die Benutzerausgabe kann ein Display umfassen. Die Benutzerausgabe kann einen Lautsprecher umfassen.

Die Kabelbearbeitungsvorrichtung kann dazu eingerichtet sein, eine Mitteilung an den Nutzer auszugeben, wenn der Kabelbearbeitungsvorrichtung ein Teilkabel zugeführt wird, für das es in der vorgegebenen Anwendung kein Teilrezept gibt, für dieses Teilkabel also kein Teilrezept automatisch auswählbar ist. Durch die Mitteilung kann eine fehlerhafte Bearbeitung des Teilkabels verhindert werden. Der Nutzer kann frühzeitig überprüfen, ob die richtige Anwendung, mit den richtigen Teilrezepten, gewählt ist. Der Nutzer kann frühzeitig überprüfen, ob alle Teilrezepte in der Speichereinheit gespeichert sind.

Die Kabelbearbeitungsvorrichtung kann dazu ausgebildet sein, das eingeführte Teilkabel zu erkennen, automatisch das entsprechende Teilrezept auszuwählen und das Teilkabel entsprechend zu bearbeiten. Anders als bei Kabelbearbeitungsvorrichtungen, in denen eine Überprüfung stattfindet, ob ein erwartetes Teilkabel einer vorgegebenen Reihenfolge zur Bearbeitung eingeführt ist und die einen Alarm ausgeben, wenn ein Fehler detektiert wird, kann die erfindungsgemäße Kabelbearbeitungsvorrichtung Teilkabel bearbeiten, die ihr in einer beliebigen Reihenfolge zugeführt werden. Ein Vorteil kann sein, dass der Bearbeitungsprozess beschleunigt sein kann. Verzögerungen durch Abweichungen von einer vorgegebenen Reihenfolge können verhindert werden. Die Bearbeitungszeit und damit die Kosten können vorteilhaft reduziert werden. Vorteilhaft kann die Bearbeitung der Kabelanordnung verbessert werden.

In einer Ausführungsform kann die Kabelbearbeitungsvorrichtung, insbesondere die Steuerung, dazu ausgebildet sein,
einen Vergleich zwischen der Sensorinformation bezüglich der detektierten Farbe und optischen Einträgen der Teilrezepte durchzuführen, und
wenn der Vergleich für einen der optischen Einträge eine Übereinstimmungsbedingung erfüllt, das zu diesem optischen Eintrag zugehörige Teilrezept der Befehlseinheit bereitzustellen, so dass die Befehlseinheit das Bearbeitungswerkzeug gemäß dem ausgewählten Teilrezept steuert, um das Teilkabel entsprechend der detektierten Farbe zu bearbeiten, und
wenn der Vergleich die Übereinstimmungsbedingung nicht erfüllt, die Kabelbearbeitungsvorrichtung eine Mitteilung generiert, wobei die Kabelbearbeitungsvorrichtung eine Benutzerausgabe aufweist, die zur Ausgabe der Mitteilung eingerichtet ist,
   wobei die Kabelbearbeitungsvorrichtung zur Bearbeitung eines ersten Teilkabels mit einer ersten Farbe und einem zur selben Kabelanordnung gehörigen zweiten Teilkabel mit einer zweiten Farbe in beliebiger (nicht vorgegebener; unbestimmter; zufälliger) Reihenfolge ausgebildet ist,
   wobei die Teilrezepte in beliebiger Reihenfolge abrufbar sind,
   wobei die Kabelbearbeitungsvorrichtung dazu ausgebildet ist, die erste Farbe zu detektieren und das zugehörige erste Teilrezept bereitzustellen, und die zweite Farbe zu detektieren und das zweite Teilrezept bereitzustellen,
   wobei die Kabelbearbeitungsvorrichtung dazu ausgebildet ist
   das erste Teilkabel zeitlich vor dem zweiten Teilkabel zu bearbeiten, wenn die erste Farbe zeitlich vor der zweiten Farbe detektiert wird, insbesondere das erste Teilkabel zu bearbeiten, bevor die zweite Farbe detektiert wird,
   und wobei die Kabelbearbeitungsvorrichtung dazu ausgebildet ist, das zweite Teilkabel zeitlich vor dem ersten Teilkabel zu bearbeiten, wenn die zweite Farbe zeitlich vor der ersten Farbe detektiert wird, insbesondere das zweite Teilkabel zu bearbeiten, bevor die erste Farbe detektiert wird.

In einer Ausführungsform kann das Bearbeitungsrezept für die vorgegebene Anwendung durch den Nutzer aus der Vielzahl an gespeicherten Bearbeitungsrezepten ausgewählt werden.

In einer Ausführungsform kann die Kabelbearbeitungsvorrichtung dazu ausgebildet sein, aus der Vielzahl an gespeicherten Bearbeitungsrezepten eine Gruppe von Bearbeitungsrezepten auszuwählen und dem Nutzer zur Auswahl bereitzustellen. Beispielsweise kann, ohne dass zuvor das Bearbeitungsrezept für die ausgewählte Anwendung gewählt wurde, ein charakteristisches Teilkabel in die Kabelbearbeitungsvorrichtung eingeführt werden und die Farbe detektiert werden. Anhand der detektierten Farbe können die Bearbeitungsrezepte selektiert werden, die ein Teilrezept assoziiert mit der detektierten Farbe des charakteristischen Teilkabels umfassen. Der Nutzer kann für die Bearbeitung der Kabelanordnung das Bearbeitungsrezept für die vorgegebene Anwendung aus der Gruppe von Bearbeitungsrezepten auswählen.

In einer Ausführungsform kann die Kabelbearbeitungsvorrichtung einen Kabelgreifer umfassen, wobei die Kabelbearbeitungsvorrichtung dazu ausgebildet ist, einen Zustellwinkel des Kabelgreifers zu detektieren und anhand des detektierten Zustellwinkels einen Isolationsdurchmesser eines gegriffenen Teilkabels zu bestimmen.

In einer Ausführungsform ist die Kabelbearbeitungsvorrichtung dazu ausgebildet, das Teilkabel anhand des Zustellwinkels des Kabelgreifers zu charakterisieren.

Der Kabelgreifer kann dazu ausgebildet sein, das Teilkabel in der Kabelbearbeitungsvorrichtung zu halten. Der Kabelgreifer kann dazu ausgebildet sein, das Teilkabel im Bearbeitungsraum zuhalten.

In einer Ausführungsform kann das Bearbeitungswerkzeug den Kabelgreifer umfassen. Der Kabelgreifer kann dazu ausgebildet sein, das Teilkabel in seiner eingeführten Position im Bearbeitungswerkzeug zu halten.

In einer Ausführungsform kann die Kabelbearbeitungsvorrichtung dazu eingerichtet sein, die Gruppe von Bearbeitungsrezepten anhand der Farbe des charakteristischen Teilkabels und anhand des Isolationsdurchmessers des charakteristischen Teilkabels zu selektieren.

In einer Ausführungsform kann die Kabelbearbeitungsvorrichtung dazu eingerichtet sein, einen Leiterdurchmesser eines elektrischen Leiters des dem Bearbeitungswerkzeug zugeführten Teilkabels zu detektieren, insbesondere über eine Messer-Leiter-Berührungsdetektion.

Das Bearbeitungswerkzeug kann zur Messer-Leiter-Berührungsdetektion ausgebildet sein.

Das Bearbeitungswerkzeug kann derart ausgebildet sein, dass bei einer Berührung eines Messers mit dem Leiter des Teilkabels, ein Berührungssignal ausgegeben wird. Anhand der relativen Position des Messers, wenn das Berührungssignal ausgegeben wird, kann der Leiterdurchmesser bestimmbar sein. Das Bearbeitungswerkzeug kann derart ausgebildet sein, dass bei einer Berührung mehrerer Messer mit dem Leiter des Teilkabels, ein Berührungssignal ausgegeben wird. Anhand der Position der Messer zueinander, wenn das Berührungssignal ausgegeben wird, kann der Leiterdurchmesser bestimmbar sein.

In einer Ausführungsform kann die Kabelbearbeitungsvorrichtung zur Bestimmung eines Zusatzzuordnungsparameters ausgebildet sein, wobei das Teilrezept einen Zusatzzuordnungsparametereintrag enthält, wobei die Steuerung dazu ausgebildet ist, eine Teilmenge an Teilkabeln anhand der Sensorinformation des optischen Sensors zu erkennen und die zugehörige Teilmenge an Teilrezepten auszuwählen, und das der Bearbeitungsposition zugeführte Teilkabel in Abhängigkeit des bestimmten Zusatzzuordnungsparameters aus der Teilmenge der Teilkabel zu erkennen und das zugeordnete Teilrezept auszuwählen. Der Zusatzzuordnungsparameter kann insbesondere der Isolationsdurchmesser und/oder der Leiterdurchmesser sein.

Die Zuordnungseinheit kann dazu ausgebildet sein, den Vergleich für alle Teilrezepte durchzuführen. In einer Ausführungsform kann die Zuordnungseinheit dazu ausgebildet sein, den Vergleich für alle Teilrezepte durchzuführen, und das Teilrezept zu wählen, das die beste Übereinstimmung zeigt.

In einer Ausführungsform kann die Steuerung, insbesondere die Zuordnungseinheit, dazu ausgebildet sein, die Teilmenge an Teilrezepten anhand der detektierten Sensorinformationen auszuwählen. Die Steuerung, insbesondere die Zuordnungseinheit, kann dazu ausgebildet sein, alle Teilrezepte auszuwählen, die die Übereinstimmungsbedingung erfüllen. Die Steuerung, insbesondere die Zuordnungseinheit, kann dazu ausgebildet sein, anhand des Zusatzzuordnungsparameters das Teilkabel zu erkennen und das zugeordnete Teilrezept (aus der Teilmenge an Teilrezepten) auszuwählen.

Ein Vorteil kann sein, dass Teilkabel derselben Farbe, die sich jedoch in einem anderen Merkmal, beispielsweise dem Leiterdurchmesser, unterscheiden, mit der Kabelbearbeitungsvorrichtung bearbeitet werden können, insbesondere ohne, dass eine zusätzliche Handlung und/oder Eingabe des Nutzers erforderlich ist. Ein Vorteil kann sein, dass dadurch die Nutzerfreundlichkeit der Kabelbearbeitungsvorrichtung erhöht sein kann.

In einer Ausführungsform kann das Teilrezept den Isolationsdurchmesser enthalten, wobei die Steuerung dazu ausgebildet ist, eine Teilmenge an Teilkabeln anhand der Sensorinformation des optischen Sensors zu erkennen und die zugehörige Teilmenge an Teilrezepten auszuwählen, und das dem Bearbeitungswerkzeug zugeführte Teilkabel anhand des bestimmten Isolationsdurchmessers aus der Teilmenge der Teilkabel zu erkennen und das zugeordnete Teilrezept auszuwählen.

In einer Ausführungsform kann das Teilrezept den Leiterdurchmesser enthalten, wobei die Steuerung dazu ausgebildet ist, eine Teilmenge an Teilkabeln anhand der Sensorinformation des optischen Sensors zu erkennen und die zugehörige Teilmenge an Teilrezepten auszuwählen, und das dem Bearbeitungswerkzeug zugeführte Teilkabel anhand des bestimmten Leiterdurchmesser aus der Teilmenge der Teilkabel zu erkennen und das zugeordnete Teilrezept auszuwählen.

Die Kabelbearbeitungsvorrichtung kann derart ausgebildet sein, dass der Zusatzzuordnungsparameter erst bestimmt wird, wenn die Steuerung eine Vielzahl an Teilrezepten auswählt. Die Steuerung kann dazu ausgebildet sein, in diesem Fall zusätzliche Daten zu empfangen. Die Steuerung kann dazu ausgebildet sein, aus den zusätzlich empfangenen Daten den entsprechenden Zusatzzuordnungsparameter zu bestimmen. Die Steuerung kann dazu ausgebildet sein, den entsprechenden Zusatzzuordnungsparameter zu empfangen.

In einer Ausführungsform kann die Kabelbearbeitungsvorrichtung derart ausgebildet sein, dass die Farbe der Teilkabel kameralos detektiert wird. Insbesondere kann die Farbe der Teilkabel detektiert werden, ohne dass ein Bild vom Teilkabel aufgenommen werden muss, beispielsweise durch eine Kamera. Ein Vorteil kann sein, dass keine Bildanalyse erforderlich ist. Auf einfache Weise kann die Farbe des Teilkabels detektiert werden.

In einer Ausführungsform ist die Kabelbearbeitungsvorrichtung derart ausgebildet, die Farbe eines jeweiligen Teilkabels anhand der Sensorinformation durch den optischen Sensor zu bestimmen.

In einer Ausführungsform kann der optische Sensor einen Farbsensor und eine Beleuchtungseinheit, insbesondere eine weiße Leuchtdiode (LED), aufweisen, wobei der optische Sensor einen Lichtleiterkopf mit zwei voneinander getrennten optischen Fasern aufweist.

In einer Ausführungsform kann eine zentrale optische Faser das Licht zum Farbsensor führen und ringförmig um die zentrale Faser angeordnete optische Fasern das Licht von der Beleuchtungseinheit, insbesondere der weißen Leuchtdiode, zum Kopf führen.

Die Sensorinformation kann Intensitäten einer Vielzahl an Anteilen sichtbaren Lichtes umfassen.

Der Farbsensor kann ein Mehrkanal-Spektralsensor sein. In einer Ausführungsform kann der Farbsensor ein 11-kanaliger Spektralsensor sein. Der Farbsensor kann lichtempfindliche Photodioden aufweisen. Der Farbsensor kann lichtempfindliche Photodioden mit vorgelagerten schmal-bandigen Farbfiltern aufweisen.

Der Farbsensor kann in einer Ausführungsform acht verschiedene Anteile des sichtbaren Lichts erfassen. Der Farbsensor kann in einer Ausführungsform Anteile von nahem Infrarotlicht erfassen. Der Farbsensor kann in einer Ausführungsform Flicker erfassen. In einer Ausführungsform kann der Farbsensor mit einem Kanal ohne Farbfilter die gesamte Intensität des einfallenden Lichts erfassen. In einer Ausführungsform kann der Farbsensor acht verschiedene Anteile des sichtbaren Lichts erfassen sowie die gesamte Intensität des einfallenden Lichts erfassen.

Der Farbsensor kann dazu ausgebildet sein, viele Farbinformationen zu detektieren. Ein Vorteil kann sein, dass die Qualität der Sensorinformation verbessert sein kann. Das Erkennen des Teilkabels kann verbessert sein. Es kann vorteilhaft ermöglicht sein, automatisch Teilkabel mit ähnlicher Farbe zu erkennen und die entsprechenden Teilrezepte korrekt auszuwählen, insbesondere ohne, dass eine zusätzliche Handlung durch den Benutzer erforderlich ist.

Die Isolation und/oder Ummantelung eines Teilkabels leuchtet nicht von sich aus. Zum Detektieren der Farbe kann es daher notwendig sein, das Teilkabel anzustrahlen. Dies kann mittels einer Beleuchtungseinheit erfolgen. Dies kann insbesondere über mindestens eine weiße LED erfolgen. Weiße LEDs können so gebaut sein, dass sie das Spektrum der Sonne nachbilden, insbesondere exakt nachbilden. Die weiße LED kann über (fast) das gesamte sichtbare Spektrum die (fast) gleich hohe Strahlungsintensität haben.

In einer Ausführungsform kann der optische Sensor eine blaue LED aufweisen. In einer Ausführungsform kann die Beleuchtungseinheit eine blaue LED aufweisen. Bei der blauen LED kann ein bestimmter Teil des Spektrums ins längerwellige gelbliche verschoben sein. Dadurch lassen sich verschiedene Farbtemperaturen erzielen.

Die weiße LED kann gegenüber der blauen LED vorteilhaft sein, da das gemessenen Teilkabel einen Peak bei blauer Wellenlänge aufweisen kann. Das Erkennen des Teilkabels anhand der Sensorinformation kann daher bei einer weißen LED verbessert sein.

In einer Ausführungsform kann der Lichtleiterkopf derart ausgebildet und so angeordnet sein, dass das Licht der weißen LED auf das zugeführte Teilkabel geworfen und das reflektierte Licht auf den Farbsensor geführt wird.

Der Lichtleiter kann für die Funktionsweise des Tast-Prinzips ausgebildet sein. Insbesondere kann der Lichtleiter zwei voneinander optisch getrennte Fasern und/oder Faserbündel aufweisen. Die optischen Fasern können koaxial angeordnet sein.

In einer Ausführungsform können neun Fasern, die kreisförmig im Kopf des Lichtleiters angeordnet sind das Kabel gleichmäßig belichten. Eine einzelne dickere Faser im Zentrum kann das reflektierte Licht zum Farbsensor leiten.

Der optische Sensor kann kamerafrei ausgebildet sein.

In einer Ausführungsform ist das Messer entlang der Kabelführungsrichtung zwischen dem Kabelgreifer und dem optischen Sensor angeordnet. In einer Ausführungsform kann der optische Sensor zwischen dem Messer und dem Anschlag angeordnet sein (entlang der Kabelführungsrichtung). In einer Ausführungsform kann der optische Sensor zwischen dem Kabelgreifer und dem Anschlag angeordnet sein (entlang der Kabelführungsrichtung).

Die Kabelbearbeitungsvorrichtung kann eine Benutzerschnittstelle aufweisen, über die ein Artikel durch den Nutzer auswählbar ist, wobei dem Artikel ein Bearbeitungsrezept zugewiesen ist.

In einer Ausführungsform kann die Kabelbearbeitungsvorrichtung dazu ausgebildet sein, eine Zuweisung der Sensorinformation bezüglich der detektierten Farbe mit dem korrespondierenden Farbeintrag zu lernen, insbesondere indem die Farbe eines Lern-Teilkabels durch den Sensor detektiert wird und dem Teilrezept mit dem korrespondierenden Farbeintrag zugewiesen wird.

In einer Ausführungsform kann das Bearbeitungswerkzeug zur Aufnahme einer Vielzahl an Teilkabeln ausgebildet sein, wobei die Kabelbearbeitungsvorrichtung einen Separator aufweist, in dem jedes der Teilkabel in einer jeweiligen Position positionierbar ist, wobei der optische Sensor dazu ausgebildet ist, die jeweiligen Farbe der Teilkabel zu detektieren, wobei die Kabelbearbeitungsvorrichtung eine Positionseinheit aufweist, über die eine relative Position zwischen dem optischen Sensor und dem Separator, insbesondere in einer Querrichtung, bestimmbar ist.

Der Separator kann eine Lagerung mit einer Vielzahl an Aussparungen aufweisen. Jede der Aussparungen kann zur Aufnahme eines Teilkabels ausgebildet sein. Die Aussparungen können nebeneinander (entlang der Querrichtung) angeordnet sein. Die Aussparungen können beabstandet voneinander sein. Dies kann ermöglichen, dass bei der Bearbeitung eines Teilkabels das Teilkabel in einer benachbarten Aussparung nicht beschädigt wird.

Die Querrichtung kann senkrecht zur Längsrichtung des Kabelbearbeitungsraumes verlaufen. Die Querrichtung kann senkrecht zur Einführungsrichtung des Kabels verlaufen.

Die relative Position des optischen Sensors zum Separator kann über die Positionseinheit bestimmbar sein.

In einer Ausführungsform kann der optische Sensor in Querrichtung bewegbar sein. Der optische Sensor kann den Separator entlang bewegbar sein, insbesondere in Querrichtung, so dass mithilfe des optischen Sensors die Farben der Teilkabel, die in den Aussparungen angeordnet sind, detektiert werden können. Dabei kann die relative Position des optischen Sensors zum Separator bestimmt werden.

In einer Ausführungsform kann der Separator in Querrichtung bewegbar sein. Der Separator kann an dem optischen Sensor bewegbar sein, insbesondere in Querrichtung, so dass mithilfe des optischen Sensors die Farben der Teilkabel, die in den Aussparungen angeordnet sind, detektiert werden können. Dabei kann die relative Position des optischen Sensors zum Separator bestimmt werden.

Indem die relative Position des optischen Sensors zum Separator bestimmt wird, kann die detektierte Farbe dem Teilkabel in einer bestimmten Position (beispielsweise einer bestimmten Aussparung) zugeordnet werden.

Das Messer kann zur Bearbeitung des Teilkabels gemäß dem ausgewählten Teilrezept entsprechend der bestimmten Position bewegt werden. In einer Ausführungsform kann das Teilkabel zur Bearbeitung durch das Messer (gemäß dem ausgewählten Teilrezept) entsprechend der bestimmten Position bewegt werden.

Ein Vorteil kann sein, dass die Teilkabel in beliebiger Abfolge nebeneinander im Separator angeordnet sein und bearbeitet werden können.

Ein zweiter Aspekt der Erfindung betrifft eine Methode zum Bearbeiten einer Kabelanordnung mit der erfindungsgemäßen Kabelbearbeitungsvorrichtung, wobei die Methode die folgenden Schritte aufweist:
- einen Zuführschritt, in dem ein Teilkabel dem Bearbeitungswerkzeug, insbesondere in die Bearbeitungsposition, zugeführt wird,
- einen Detektionsschritt, im dem die Farbe des Teilkabels durch den optischen Sensor detektiert wird,
- einen Erkennungsschritt, im dem das Teilkabel anhand der Sensorinformation bezüglich der detektierten Farbe erkannt wird,
- einen Zuordnungsschritt, in dem das dem erkannten Teilkabel zugeordnete Teilrezept ausgewählt wird,
- einen Ausführungsschritt, in dem das erkannte Teilkabel gemäß dem ausgewählten Teilrezept bearbeitet wird.

In einer Ausführungsform weißt die Methode weiterhin die folgenden Schritte auf
- einen weiteren Zuführschritt, in dem ein zweites Teilkabel dem Bearbeitungswerkzeug, insbesondere in die Bearbeitungsposition, zugeführt wird,
- einen weiteren Detektionsschritt, im dem die Farbe des zweiten Teilkabels durch den optischen Sensor detektiert wird,
- einen weiteren Erkennungsschritt, im dem das zweite Teilkabel anhand der Sensorinformation bezüglich der detektierten Farbe erkannt wird,
- einen weiteren Zuordnungsschritt, in dem das dem erkannten zweite Teilkabel zugeordnete zweite Teilrezept ausgewählt wird,
- einen weiteren Ausführungsschritt, in dem das erkannte zweite Teilkabel gemäß dem ausgewählten zweiten Teilrezept bearbeitet wird.

In einer Ausführungsform kann eine Vielzahl an Teilkabeln, insbesondere die Kabelanordnung, in dem Zuführschritt dem Bearbeitungswerkzeug zugeführt werden. In einer Ausführungsform kann die Farbe jedes Teilkabels der zugeführten Kabelanordnung durch den optischen Sensor detektiert werden. In einer Ausführungsform kann eine jeweilige Position des jeweiligen Teilkabels bestimmt werden. In einer Ausführungsform können alle Teilkabel anhand der Sensorinformationen bezüglich der detektierten Farben erkannt werden. In einer Ausführungsform können in dem Zuordnungsschritt, die den erkannten Teilkabeln zugeordneten Teilrezepte ausgewählt werden. In einer Ausführungsform können alle erkannten Teilkabel der Kabelanordnung gemäß den jeweiligen ausgewählten Teilrezepten in Ausführungsschritten bearbeitet werden. In einer Ausführungsform können alle Teilkabel gleichzeitig (parallel) bearbeitet werden. In einer Ausführungsform können die Teilkabeln zeitlich nacheinander (seriell) bearbeitet werden. In einer Ausführungsform kann die Position der Kabelanordnung zwischen zwei Ausführungsschritten verändert werden. In einer Ausführungsform kann die Position des Messers zwischen zwei Ausführungsschritten verändert werden.

Ein Aspekt betrifft eine Methode zur Auswahl eines Bearbeitungsrezeptes, wobei die Methode die Schritte umfasst:
- Bereitstellen der Kabelbearbeitungsvorrichtung mit einer Vielzahl an Bearbeitungsrezepten,
- Zuführen eines ersten Teilkabels, insbesondere eines charakteristischen Teilkabels, in das Bearbeitungswerkzeug,
- Detektieren der ersten Farbe durch den optischen Sensor,
- Vergleichen aller Farbeinträge der Vielzahl an Bearbeitungsrezepten mit der Sensorinformation assoziiert mit dem ersten Teilkabel,
- Auswahl des Bearbeitungsrezeptes, das einen korrespondierenden Farbeintrag mit der Sensorinformation assoziiert mit dem ersten Teilkabel aufweist.

Ein Aspekt betrifft eine Methode zur Auswahl eines Bearbeitungsrezepte, wobei die Methode die Schritte umfasst:
- Bereitstellen der Kabelbearbeitungsvorrichtung mit einer Vielzahl an Bearbeitungsrezepten,
- Zuführen eines ersten Teilkabels, insbesondere eines charakteristischen Teilkabels, in das Bearbeitungswerkzeug,
- Detektieren der ersten Farbe durch den optischen Sensor,
- Erkennen des ersten Teilkabels anhand der Sensorinformation,
- Auswahl des Bearbeitungsrezeptes, das ein Teilrezept für das erkannte erste Teilkabel umfasst.

Ein Aspekt betrifft eine Methode zur Auswahl eines Bearbeitungsrezepte, wobei die Methode die Schritte umfasst:
- Bereitstellen der Kabelbearbeitungsvorrichtung mit einer Vielzahl an Bearbeitungsrezepten,
- Zuführen der Kabelanordnung in das Bearbeitungswerkzeug,
- Detektieren der Farben aller Teilkabel der Kabelanordnung durch den optischen Sensor,
- Vergleichen aller Farbeinträge der Vielzahl an Bearbeitungsrezepten mit den Sensorinformation assoziiert mit den Teilkabeln,
- Auswahl des Bearbeitungsrezeptes, das korrespondierende Farbeinträge mit den Sensorinformationen assoziiert mit den Teilkabeln aufweist.

Insbesondere können die Farben der einzelnen Teilkabel nacheinander detektiert werden. Der Sensor kann entlang der einzelnen Kabel verschoben werden und nacheinander die Sensorinformationen zu den einzelnen Teilkabeln aufnehmen. Die einzelnen Teilkabel können entlang dem Sensor verschoben werden und der Sensor kann nacheinander die Sensorinformationen zu den einzelnen Teilkabeln aufnehmen. Insbesondere kann der Separator mit den darin angeordneten Teilkabeln verschoben werden, so dass zeitlich nacheinander die in den Aussparungen angeordneten Teilkabel am Sensor vorbeigeführt werden.

Ein Aspekt betrifft eine Methode zur Auswahl eines Bearbeitungsrezepte, wobei die Methode die Schritte umfasst:
- Bereitstellen der Kabelbearbeitungsvorrichtung mit einer Vielzahl an Bearbeitungsrezepten,
- Zuführen der Kabelanordnung in das Bearbeitungswerkzeug,
- Detektieren der Farben aller Teilkabel der Kabelanordnung durch den optischen Sensor,
- Erkennen der Teilkabel der Kabelanordnung anhand der Sensorinformationen,
- Auswahl des Bearbeitungsrezeptes, das die Teilrezepte für die erkannten Teilkabel umfasst.

Ein weiterer Aspekt der Erfindung betrifft ein computerlesbare Speichermedium, auf dem Anweisungen gespeichert sind, die, wenn sie ausgeführt werden, die Steuerung konfigurieren,
um mittels der Speichereinheit, mindestens ein Bearbeitungsrezept für die Bearbeitung der Kabelanordnung zu speichern, wobei das Bearbeitungsrezept eine Mehrzahl Teilrezepte mit jeweils mindestens einem Bearbeitungsschritt enthält, wobei jedem Teilkabel ein jeweiliges Teilrezept zugeordnet ist und wobei die Teilrezepte einen den Bearbeitungsschritt parametrisierenden Bearbeitungsparameter enthalten,
um mittels der Zuordnungseinheit, eine Sensorinformation bezüglich der detektierten Farbe zu empfangen, in Abhängigkeit der empfangenen Sensorinformation das dem Bearbeitungswerkzeug, insbesondere der Bearbeitungsposition, zugeführte Teilkabel zu erkennen, und das dem zugeführten Teilkabel zugeordnete Teilrezept auszuwählen, und
um mittels der Befehlseinheit den Bearbeitungsschritt des ausgewählten Teilrezeptes zu empfangen, und um das Bearbeitungswerkzeug zum Ausführen des Bearbeitungsschrittes des ausgewählten Teilrezeptes an dem erkannten zugeführten Teilkabel zu steuern.

Ein weiterer Aspekt der Erfindung betrifft ein computerlesbares Speichermedium, auf dem Anweisungen gespeichert sind, die, wenn sie ausgeführt werden, die Steuerung zur Ausübung der Schritte der Methode konfiguriert.

Weitere Merkmale und Vorteile der Erfindung werden nachfolgend anhand der Figurenbeschreibung von Ausführungsbeispielen erläutert. Es zeigen:
- Figur 1: eine schematische Illustration einer Ausführungsform der Kabelbearbeitungsvorrichtung,
- Figur 2: eine perspektive Ansicht eines beispielhaften Abisolierkopfes,
- Figur 3: eine Ansicht von oben des beispielhaften Abisolierkopfes der Figur 2,
- Figur 4: eine schematische Darstellung einer beispielhaften Kabelanordnung,
- Figur 5: eine beispielhafte Visualisierung eines Bearbeitungsrezeptes,
- Figur 6: eine beispielhafte Trenn- und Abisoliermaschine,
- Figur 7: ein beispielhaftes Trenn- und Abisoliermodul,
- Figur 8: einen beispielhaften Messerkopf eines Trenn- und Abisoliermoduls mit einem Messerpaar,
- Figur 9: einen beispielhaften Messerkopf eines Trenn- und Abisoliermoduls mit drei Messerpaaren,
- Figur 10: eine Illustration einer beispielhaften Abfolge von Schritten der Methode zur Bearbeitung einer Kabelanordnung,
- Figur 11: eine Illustration einer beispielhaften Abfolge von Schritten der Methode,
- Figur 12: eine Illustration beispielhafter Methodenschritte, und
- Figur 13: eine Illustration einer beispielhaften Abfolge von Schritten der Methode zur Bearbeitung einer Kabelanordnung.

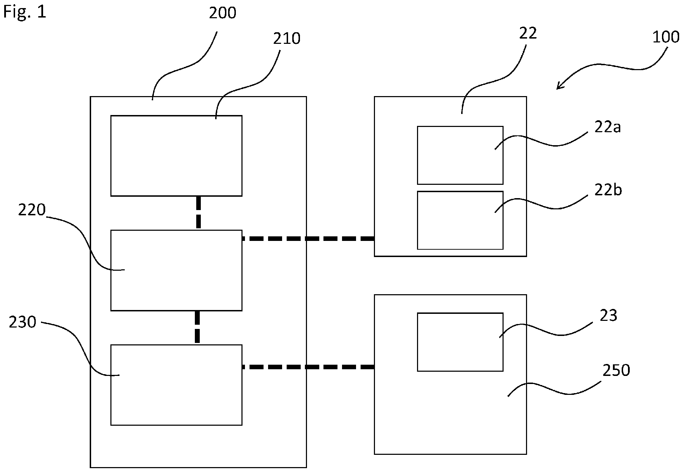

In Figur 1 ist eine Ausführungsform einer Kabelbearbeitungsvorrichtung 100 gezeigt. Die gezeigte Kabelbearbeitungsvorrichtung 100 umfasst eine Steuerung 200. Die Ausführungsform der Kabelbearbeitungsvorrichtung 100, insbesondere die Steuerung 200, weist eine Speichereinheit 210 auf. Die Ausführungsform der Kabelbearbeitungsvorrichtung 100, insbesondere die Steuerung 200, weist eine Zuordnungseinheit 220 auf. Die Ausführungsform der Kabelbearbeitungsvorrichtung 100, insbesondere die Steuerung 200, weist eine Befehlseinheit 230 auf. Die Steuerung 200 kann die Speichereinheit 210, die Zuordnungseinheit 220 und die Befehlseinheit 230 umfassen. Die Speichereinheit 210, die Zuordnungseinheit 220 und die Befehlseinheit 230 können kommunikativ miteinander verbunden sein. Die Steuerung 200 kann mit einem Speicher, beispielsweise einem externen Speicher, kommunikativ verbunden und/oder verbindbar sein. Die Steuerung 200 kann einen Prozessor aufweisen.

Die Kabelbearbeitungsvorrichtung 100 kann einen optischen Sensor 22 aufweisen. Der optische Sensor 22 kann mit der Zuordnungseinheit 220 verbunden sein. Der optische Sensor 22 kann Sensordaten an die Zuordnungseinheit 220 übermitteln. Der optische Sensor 22 kann einen Farbsensor 22a aufweisen. Der optische Sensor 22 kann eine Beleuchtungseinheit 22b aufweisen. Die Beleuchtungseinheit 22b kann eine Leuchtdiode aufweisen, insbesondere eine weiße LED.

Die Kabelbearbeitungsvorrichtung 100 kann ein Bearbeitungswerkzeug 250 aufweisen. Da Bearbeitungswerkzeug 250 kann mit der Befehlseinheit 230 verbunden sein. Das Bearbeitungswerkzeug 250 kann ein Messer 23 aufweisen. Das Bearbeitungswerkzeug 250 kann ein Messerpaar 23 aufweisen.

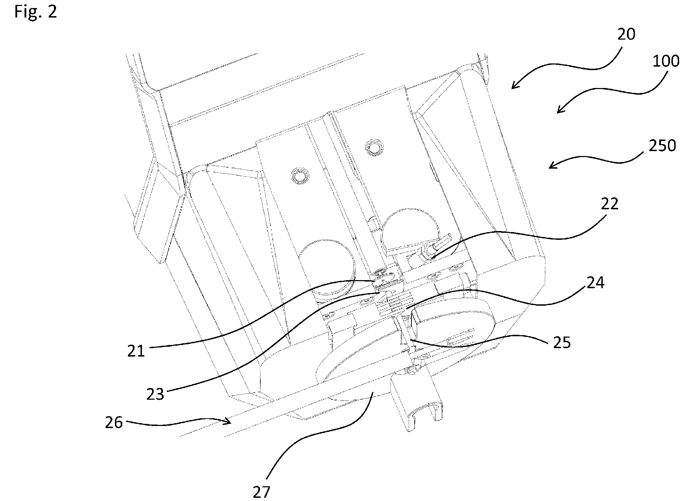

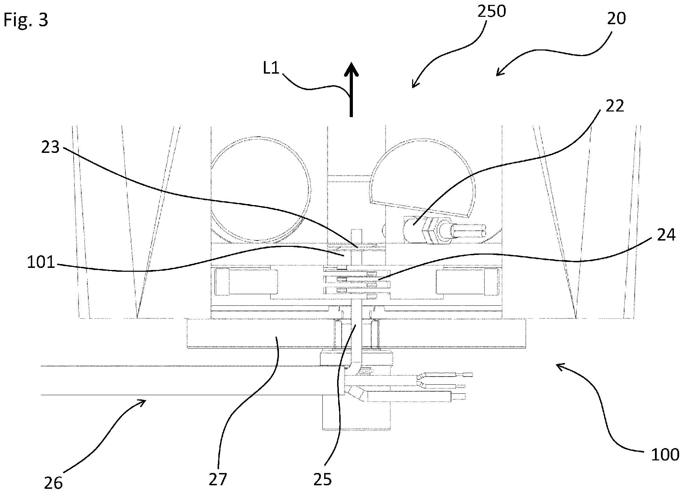

In den Figuren 2 und 3 sind unterschiedliche Ansichten eines Ausschnittes einer beispielhaften Kabelbearbeitungsvorrichtung 100 gezeigt. Insbesondere ist ein Abisolierkopf 20 gezeigt. Das Bearbeitungswerkzeug 250 kann als Abisolierkopf 20 ausgebildet sein.

Die gezeigte Ausführungsform des Abisolierkopfes 20 weist einen Bearbeitungsraum 101 auf, in den das Teilkabel 25 der Kabelanordnung 26 eingeführt werden kann. Der illustrierte Abisolierkopf 20 weist einen Anschlag 21 auf. Das Teilkabel 25 kann bis zum Anschlag 21 in die Kabelbearbeitungsvorrichtung 100 eingeführt werden. Der Abisolierkopf 20 kann weiterhin einen Kabelgreifer 24 aufweisen. Der Kabelgreifer 24 kann das eingeführte Teilkabel 25 greifen und insbesondere in Position halten. Der Abisolierkopf 20 kann ein Messerpaar 23 aufweisen. Das Messerpaar 23 kann das eingeführte Teilkabel 25 bearbeiten, beispielsweise die Isolierung einschneiden. Der Abisolierkopf 20 kann einen optischen Sensor 22 aufweisen. Der optische Sensor 22 kann in Richtung des Bearbeitungsraumes 101 ausgerichtet sein, so dass der optische Sensor 22 die Farbe des Teilkabels 25, das in die Kabelbearbeitungsvorrichtung 100 eingeführt ist, detektieren kann.

Der Bearbeitungsraum 101 kann sich entlang einer Längserstreckung L1 erstrecken. Das Teilkabel 25 kann entlang der Längserstreckung L1 in die Kabelbearbeitungsvorrichtung 100 eingeführt werden.

Die Kabelbearbeitungsvorrichtung 100 kann einen Zugriffsschutz 27 aufweisen. Der Zugriffsschutz 27 kann verhindern, dass der Nutzer in den Abisolierkopf 20, insbesondere in den Bearbeitungsraum, hineingreift. Der Arbeitsschutz kann dadurch vorteilhaft erhöht sein.

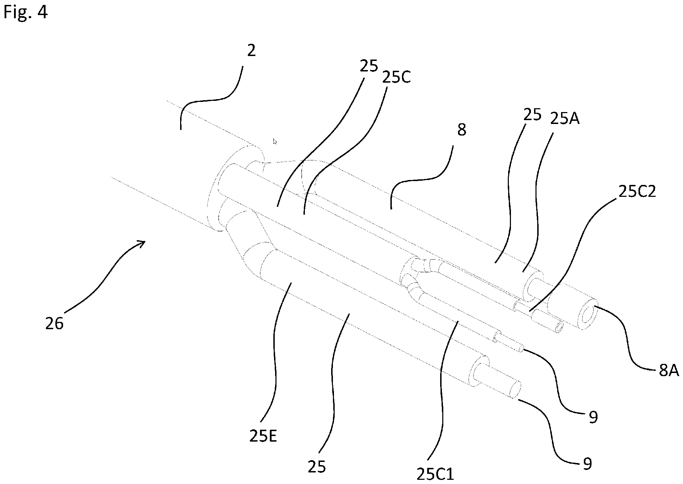

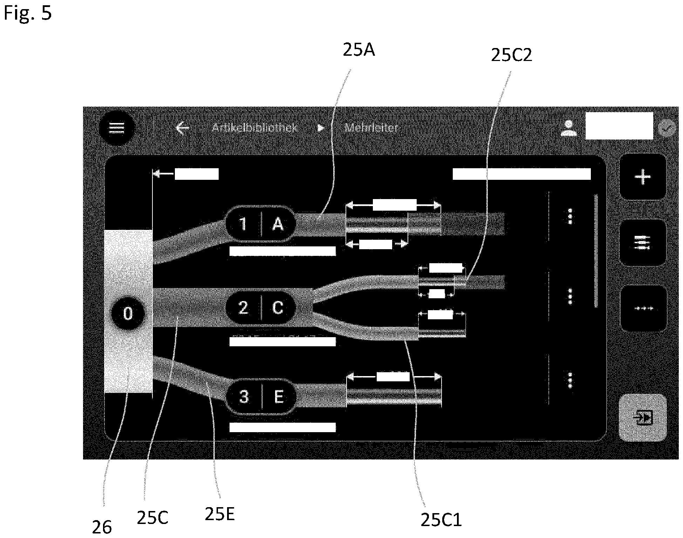

In Figur 4 ist eine beispielhafte Kabelanordnung 26 illustriert, die eine Vielzahl an Teilkabeln 25 (25A, 25C, 25E) umfasst. In Figur 5 ist das zugehörige Bearbeitungsrezept beispielhaft illustriert. Die Kabelanordnung 26 kann einen Mantel 2 aufweisen. Der Mantel 2 kann eine Vielzahl von Teilkabeln 25 umschließen. Die Teilkabel 25A und 25E weisen jeweils einen Leiter 9 und eine Isolation 8 auf. Das Teilkabel 25C weist zwei weitere Teilkabel 25C1 und 25C2 auf, die jeweils einen Leiter 9 und eine Isolation 8 aufweisen. Der Durchmesser der illustrierten weiteren Teilkabel 25C1 und 25C2 ist kleiner als der Durchmesser der Teilkabel 25A und 25E.

In Figur 5 ist beispielhaft gezeigt, wie die Kabelanordnung 26 insbesondere die einzelnen Teilkabel 25 bearbeitet werden könnten, insbesondere die Isolationen 8 eingeschnitten und abgezogen werden könnten. Für das Teilkabel 25E ist ein Teilabzug eines Abschnittes 8E der Isolation 8 illustriert.

In einer Ausführungsform kann der Nutzer den Artikel über die Bedienoberfläche wählen, den er herstellen möchte. Ein möglicher Artikel kann eine Kabelanordnung 26 sein (siehe beispielsweise Figur 4). Es ist möglich, dass ein Artikel über den Farbparameter bestimmbar ist, nämlich wenn es nur einen Artikel zu diesem Farbparameter gibt, beispielsweise wenn ein Teilkabel 25 mit einer spezifischen Farbe in nur einer Kabelanordnung 26 vorliegt.

Die Kabelanordnung 26 kann mit der erfindungsgemäßen Kabelbearbeitungsvorrichtung bearbeitet werden. Der Nutzer muss dafür nun nicht mehr vorgängig die einzelnen Teilkabel sortieren und in der Reihenfolge einlegen, die über eine Bedienoberfläche vorgegeben wird. Die Reihenfolge bestimmt der Nutzer durch das Einführen der einzelnen Teilkabel. Diese kann bei der Herstellung von gleichen Artikeln immer unterschiedlich sein. Der Nutzer muss sich nicht auf eine Reihenfolge festlegen. Die Kabelbearbeitungsvorrichtung kann auch dazu ausgebildet sein zu erkennen, wenn der Nutzer ein falsches Teilkabel in die Kabelbearbeitungsvorrichtung einführt, dessen Farbe nicht definiert wurde und/oder dessen Farbe nicht zum gewählten Artikel passt. So kann vorteilhaft die Produktion einer fehlerhaften bzw. falschen Kabelanordnung verhindert und der Nutzer drauf hingewiesen werden. Beim Einführen des Teilkabels kann das eingeführte Teilkabelende einen Anschlag (Trigger) berühren. Das Berühren des Anschlags vom Teilkabel kann den Start der Applikation (Teilrezept) auslösen. Das Teilkabel kann nun durch das Kabelgreiferpaar vor dem Teilkabelende gegriffen werden.

Die detektierte Farbe (Mantelfarbe, Isolationsfarbe, Farbe des Teilkabels) kann mit dem eingelernten Farbparameter verglichen und eine Abweichung berechnet werden (beispielsweise mittels kleinster quadratischer Abweichungen o. ä.). Anhand des Vergleiches kann entschieden werden, welchem aller eingelernten Teilkabel oder Leiter des gewählten Artikels (bearbeitete Kabelanordnung) das eingeführte Teilkabel am ehesten entspricht. Das eingeführte Teilkabel kann nun anhand der zugewiesenen Applikation (Teilrezept) bearbeitet werden. Danach kann das Kabelgreiferpaar das bearbeitete Teilkabel wieder freigeben.

Wenn es sich um eine mehradrige Kabelanordnung handelt, können so alle verschiedenfarbigen Teilkabel nacheinander bearbeitet werden, um den Artikel fertig zu stellen. Danach folgt zum Beispiel das nächste Kabelende eines gleichen Artikels. Ein Beispiel eines Artikels ist in der Figur 4 dargestellt. Dabei kann zuerst der Mantel der mehradrigen Kabelanordnung 26 abisoliert werden. Dieser kann beispielsweise die Farbe schwarz aufweisen und das zugehörige Teilrezept den entsprechenden Farbeintrag und/oder die entsprechenden Farbparameter aufweisen. Danach können die Teilkabel 25 in beliebiger Reihenfolge abisoliert werden. Das beispielhafte Teilkabel 25C (beispielsweise mit der Farbe orange) weist weiterhin zwei Teilkabel 25 (Innenleiter) auf. Somit sind in diesem Beispiel zwei weitere Teilkabel, die abisoliert werden müssen, vorhanden. Diese können beispielsweise dieselbe Farbe (z. B. Pink) aufweisen, sollen aber unterschiedlich bearbeitet werden. Es müssen daher unterschiedliche Teilrezepte gewählt werden. Die beispielsweise pinken Teilkabel können unterschiedliche Applikationen aufweisen. In einem derartigen Szenario kann es erforderlich sein, zusätzlich zur Farberkennung mindestens einen zusätzlichen Parameter zu prüfen, um das erforderliche Teilrezept zu wählen. In einer Ausführungsform kann in solchen Fällen mindestens einer der folgenden weiteren Parameter detektiert und/oder zur Teilrezeptauswahl herangezogen werden:
- über den Zustellwinkel der Kabelgreifer (Radiale Position im Bezug zur Kabelachse) kann der Isolationsdurchmesser des Kabels ermittelt werden;
- mittels AIC, Adaptive Incision Control kann der Durchmesser des elektrischen Leiters ermittelt werden. Es kann mit den Messern an der Abisolierposition durch die Isolation bis auf den elektrischen Leiter runter eingeschnitten werden, bis ein elektrischer Kontakt entsteht. Dieser Moment und über diese Position der Messer kann wiederum der Durchmesser des elektrischen Leiters ermittelt werden.

Falls die zusätzlichen Parameter keine eindeutige Zuordnung des Teilkabels ermöglichen, kann eine Ausgabe, beispielsweise ausgegeben über ein Display, an den Nutzer folgen. Dieser kann per Hand das nächste Teilrezept auswählen. Der Nutzer kann in diesem Fall die Applikationsreihenfolge über die Bedienoberfläche vorgeben.

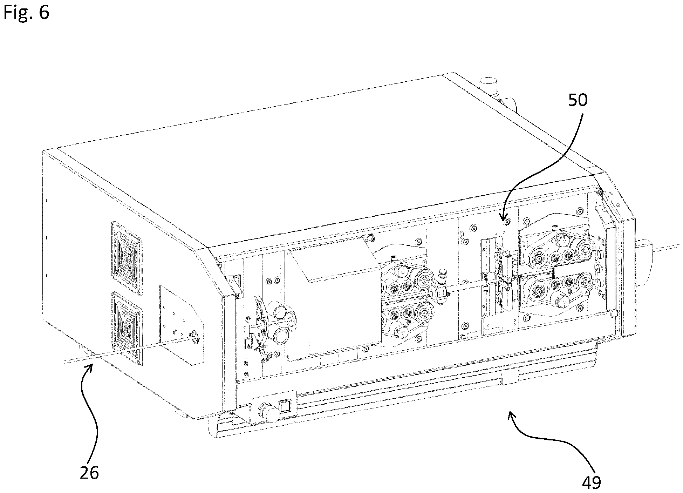

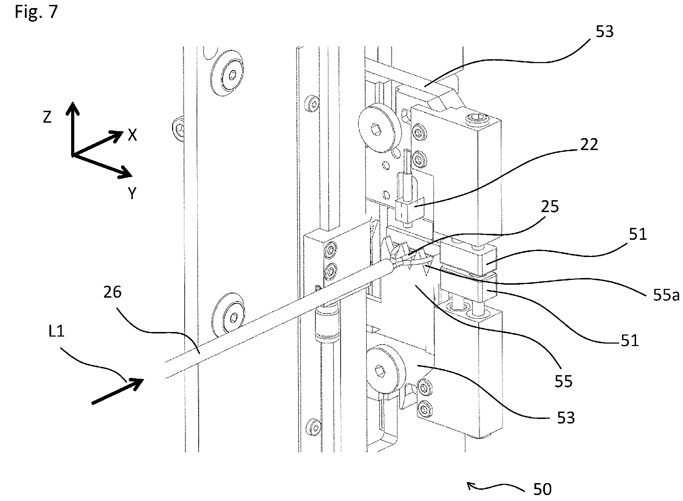

Die Figur 6 zeigt eine beispielhafte Trenn- und Abisoliermaschine 49. In den Figuren 7 bis 9 sind Ausschnitte einer Trenn- und Abisoliermaschine 49 gezeigt, insbesondere Trenn- und Abisoliermodul 50.

Das Trenn- und Abisoliermodul 50 kann einen oberen Messerbalken 53, 53a aufweisen und einen unteren Messerbalken 53, 53b. Der obere Messerbalken 53, 53a und der untere Messerbalken 53, 53b können einander gegenüberliegen. In dem illustrierten Beispiel ist der optische Sensor 22 an dem oberen Messerbalken 53, 53a festgelegt. Das Trenn- und Abisoliermodul 50 kann einen Separator 55 aufweisen. Der Separator 55 kann an dem unteren Messerbalken 53, 53b festgelegt sein. Der Separator 55 kann Aussparungen 55a aufweisen. Die Aussparungen 55a können zur Aufnahme der Teilkabel 25 ausgebildet sein. Die Teilkabel 25 der Kabelanordnung 26 können nebeneinander im Separator 55 liegen. Der optische Sensor 22 kann derart angeordnet sein, dass er in Richtung des Separators 55 ausgerichtet ist, insbesondere so, dass der optische Sensor die Farben der Teilkabel 25, die im Separator 55 angeordnet sind, detektieren kann.

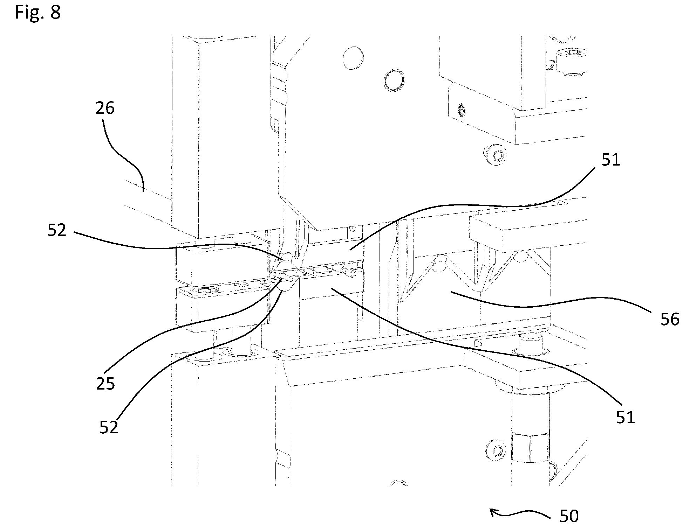

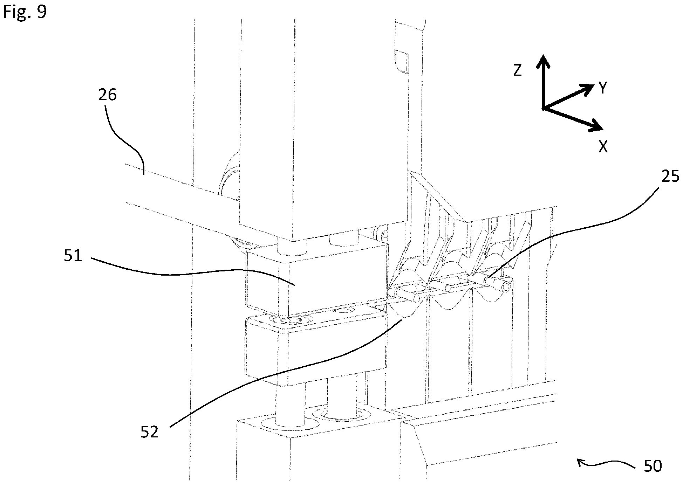

Das Trenn- und Abisoliermodul 50 kann ein Kammbalkenpaar 51 aufweisen. Das Trenn- und Abisoliermodul 50 kann ein Messerpaar 52 aufweisen (siehe Figur 8). Das Trenn- und Abisoliermodul 50 kann eine Vielzahl an Messerpaaren 52 aufweisen, beispielsweise drei Messerpaare 52 (siehe Figur 9). Das Trenn- und Abisoliermodul 50 kann ein weiteres Messer 56 aufweisen, das beispielsweise zum Durchtrennen der Kabelanordnung 26 eingerichtet ist.

Die illustrierte Ausführungsform der Trenn- und Abisoliermaschine 49 kann dazu eingerichtet sein, dass die Kabelanordnung 26 im Trenn- und Abisoliermodul 50 mittels eines Trennmesserpaares 56 auf die gewünschte Länge abgelängt wird. Danach kann mit demselben oder einem anderen Messerpaar, welches auf demselben Messerbalken montiert ist, der Außenmantel der Kabelanordnung 26 abisoliert und die Teilkabel 25 freigelegt werden. Das Trenn- und Abisoliermodul 50 kann ein Kammbalkenpaar 51 aufweisen. Das Trenn- und Abisoliermodul 50 kann dazu ausgebildet sein, wenn nötig, die Teilkabel 25 mit dem Kammbalkenpaar 51 durch schnelle auf und zu Bewegungen (klopfend) in X-Richtung flachzudrücken. Die Teilkabel 25 können sich vor der Verarbeitung kreisrund um die Kabelachse herum verteilen. Es können Kabelanordnungen mit zwei, drei oder mehr Teilkabeln 25 verarbeitet werden. In diesem Beispiel wird ein typisches dreiphasiges Gerätekabel beschrieben. Um die Teilkabel 25 flach zu kämmen, kann die Kabelanordnung 26 von der Außenmantel-Abisolierstelle an in Gegenrichtung zur Förderrichtung bewegt und dabei mit dem Kammbalkenpaar 51 die Teilkabel 25 gedrückt werden, so dass sich diese leicht verbiegen und auf Höhe der Kabelachse nebeneinander auf selber Ebene zu liegen kommen.

Mit einem Separator 55, welcher in alle Richtungen bewegt werden kann, können die Teilkabel 25 in Y-Richtung voneinander distanziert werden. Der Separator 55 kann entweder eine eigene Verfahrmechanik und Aktor besitzen. Der Separator 55 kann gefedert auf den Abisoliermessern 52, beispielsweise am Messerbalken, angebracht sein. Die Distanz zwischen den einzelnen Teilkabeln 25 kann benötig werden, damit das Abisoliermesser beim Abisolieren eines bestimmten Teilkabels 25 die daneben liegenden Teilkabel 25 nicht verletzt/beschädigt.

Da die farbliche Reihenfolge der Teilkabel 25 dem Zufall überlassen ist, kann die Vorrichtung, insbesondere das Trenn- und Abisoliermodul 50, dazu eingerichtet sein, nach dem Kämmen und Separieren die Farben der Teilkabel 25 zu ermitteln. Dazu kann der optische Sensor 22, insbesondere der Lichtleiterkopf, in Y- Richtung über die Teilkabel 25 bewegt werden. Der optische Sensor 22 kann am Messerbalken befestigt sein und so zusammen mit den Messern bewegt werden. In einer Ausführungsform kann der optische Sensor 22 eine eigene Verfahrmechanik und Aktor aufweisen.

Nachfolgend werden zwei mögliche Methoden für die weitere Bearbeitung der Teilkabel 25 beschrieben. In einer ersten Variante umfasst der Messerbalken neben dem Trennmesserpaar ein weiteres, schmäleres Messerpaar 52, um jedes Teilkabel 25 in Folge (seriell, nacheinander) zu bearbeiten. Dazu kann dieses Messerpaar 52 in Y-Richtung zum ersten Teilkabel 25 bewegt werden, um dann mit der Applikation der entsprechenden Farbe das Teilkabel 25 durch Einschneiden in Z-Richtung zu bearbeiten. Danach kann das Messerpaar 52 in Y-Richtung zum nächsten Teilkabel 25 bewegt werden, um dieses mit der Applikation der dortigen Farbe zu bearbeiten. So können die Applikationen durchgeführt werden, bis alle Teilkabel 25 bearbeitet sind. Auch hier können die Teilkabel 25 unterschiedliche Anforderungen aufweisen und deshalb unterschiedliche Applikationen erfordern. Deshalb können die Bewegungen der Kabelanordnung 26 in beide X-Richtungen sowie die Position und tiefe des Einschneidens des Messerpaares 52 in Z-Richtung wie auch ob eine Abzugslänge oder Teilabzug zu erfolgen hat, von Teilkabel 25 zu Teilkabel 25 variieren. Die Längsrichtung L1 kann sich in Z-Richtung erstrecken.

In einer zweiten Variante kann der Messerbalken nebst den Messerpaaren 56 über eine Vielzahl weitere, schmälere Messerpaare 52 verfügen. Die Anzahl der Messerpaare 52 kann identisch sein mit der Anzahl der zu bearbeitenden Teilkabel 25. Diese Messerpaare 52 können in der Z-Achse alle eine jeweilige eigene Verfahrmechanik aufweisen. Diese Messerpaare 52 können in der Z-Achse alle einen jeweiligen eigenen Aktor aufweisen. Die Teilkabel 25 können gleichzeitig (parallel), jeweils durch ein eigenes Messerpaar 52 bearbeitet werden, wobei jedes Teilkabel 25 anhand der detektierten Farbe bearbeitet werden kann. Jedes Teilkabel 25 könnte unterschiedlich, aber zur gleichen Zeit, bearbeitet werden. Das kann bedeuten, dass bei der Bearbeitung des rechten Kabelendes die Kabelanordnung 26 von der Stelle der Mantelabisolierung ausgehend in Gegenrichtung zur Transportrichtung bewegt wird und dabei die Messerpaare 52 bei deren Einschneidstellen, deren Applikation entsprechend in deren Teilkabel 25 einschneiden und abisolieren. Die Kabelanordnung 26 kann sich dabei immer weiter in dieselbe Richtung bewegen, bis alle Applikationen erfüllt sind und alle Messerpaare zurück gefahren sind. Die Position und die Tiefe des Einschneidens der Messerpaare 52 wie auch der Entscheid ob Voll- oder Teilabzug etc. kann von Teilkabel 25 zu Teilkabel 25 variieren. Im Gegensatz zur ersten Variante kann die zweite Variante schneller sein, da die Teilkabel 25 parallel verarbeitet werden können. Ein Vorteil kann sein, dass die Bearbeitungsdauer reduziert sein kann. Ein Vorteil der ersten Variante kann sein, dass die Verfahrensmechanik des Messerpaares einfacher sein kann. Der Wartungsaufwand und die diesbezüglichen Kosten können reduziert sein.

In beiden beschriebenen Ausführungsvarianten kann, nachdem alle Teilkabel 25 bearbeitet wurden, mit dem Abisoliermesser 56 des Außenmantels am Ende des Außenmantels ein ringförmiges Mantelstück eingeschnitten und über die Teilkabel 25 teilabgezogen werden, so dass die Teilkabel 25 wieder in zentrischer Anordnung und nahe einander zu liegen kommen, um die Litzen der Abisolierten Teilkabel 25 beim Weitertransport und der Weiterverarbeitung vor Spleißen und/oder Beschädigungen zu schützen.

Die Ausführungsform der Trenn- und Abisoliermaschine 49 kann dazu ausgebildet sein, sowohl das linke als auch das rechte Ende der Kabelanordnung 26 zu bearbeiten. Die Reihenfolge spielt dabei keine Rolle. Je nach Kabeltyp könnte es erforderlich sein, dass das Trenn- und Abisoliermodul 50 ein weiteres Kammbalkenpaar und/oder ein weiterer Separator und/oder ein weiterer optischer Sensor auf der gegenüberliegenden Seite des Messerpaares aufweist.

Ein Vorteil kann sein, dass die Trenn- und Abisoliermaschine 49 einen hohen Automatisierungsgrad aufweist. Die Kabelenden müssen nicht mehr händisch in die Maschine eingelegt werden, sondern die Kabelanordnung und deren Teilkabel Inline in der Kabelachse transportiert, getrennt wie auch abisoliert werden.

Außerdem kann das Rohmaterial nach Farbe und Durchmesser vorgängig eingelernt werden. Der Durchmesser kann über einen Durchmessersensor gemessen werden. Die Farbe und der Durchmesser können genutzt werden, um beim nächsten Laden eines Rohmaterials:
- das Rohmaterial zu verifizieren in dem es mit dem gewählten Artikel abgeglichen wird, und/oder
- den Artikel gemäß dem erkannten Rohmaterial zu laden, und/oder
- die ladbaren Artikel werden auf das erkannte Rohmaterial eingeschränkt (Filterung der Artikel-Bibliothek).

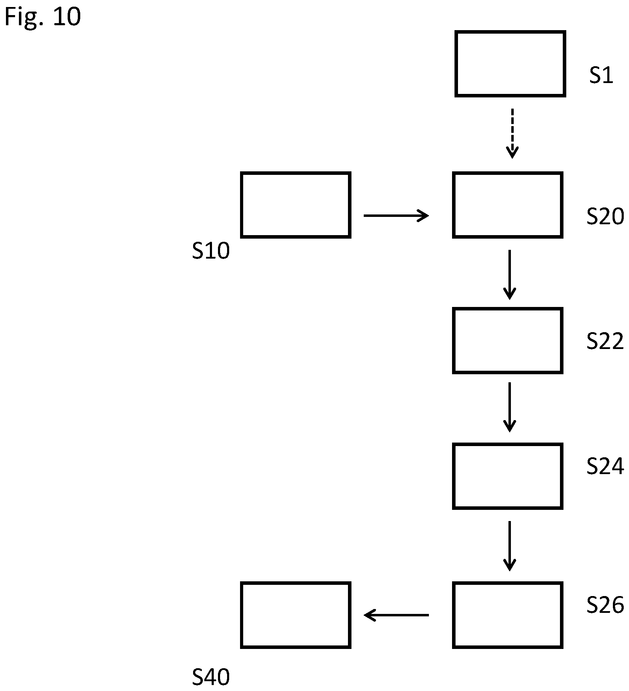

In Figur 10 ist eine beispielhafte Abfolge von Schritten zur Bearbeitung einer Kabelanordnung dargestellt.

Das Bearbeitungsrezept kann für die vorgegebene Anwendung im Schritt S1 ausgewählt werden. Im Schritt S10 kann das erste Teilkabel in die Kabelbearbeitungsmaschine eingeführt werden. Die Farbe des ersten Teilkabels kann mithilfe des optischen Sensors im Schritt S20 erkannt werden und das entsprechende Teilkabel zugeordnet werden (Schritt S22). Entsprechend dem zugeordneten Teilkabel kann des zugehörige Teilrezept ausgewählt werden (Schritt S24). Das Teilkabel kann durch das Bearbeitungswerkzeug gemäß dem ausgewählten Teilrezept bearbeitet werden (Schritt 26). Anschließend kann das bearbeitete Teilkabel aus der Kabelbearbeitungsmaschine, insbesondere dem Bearbeitungsraum, ausgeführt werden (Schritt S40). Das zweite Teilkabel der Kabelanordnung kann nun in die Kabelbearbeitungsmaschine eingeführt werden (Schritt S10). Die Schritte S20, S22, S24, S26 und S40 können an dem eingeführten zweiten Teilkabel durchgeführt werden.

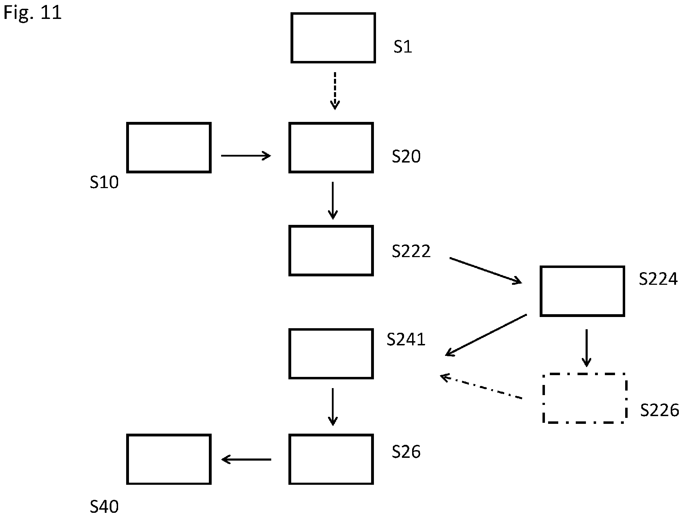

In Figur 11 ist eine beispielhafte Abfolge von Schritten zur Bearbeitung einer Kabelanordnung dargestellt. Das Bearbeitungsrezept kann für die vorgegebene Anwendung im Schritt S1 ausgewählt werden. Im Schritt S10 kann das erste Teilkabel in die Kabelbearbeitungsmaschine eingeführt werden. Die Farbe kann mithilfe des optischen Sensors im Schritt S20 erkannt werden. Mehrere Teilkabel und/oder die assoziierten Teilrezepte können der detektierten Farbe zugeordnet werden (Schritt S222). Im Schritt S224 kann zumindest ein Zusatzzuordnungsparameter des eingeführten Teilkabels bestimmt werden. Anhand des Zusatzzuordnungsparameters kann das Teilrezept aus den assoziierten Teilrezepte ausgewählt werden (Schritt S241). Das Teilkabel kann durch das Bearbeitungswerkzeug gemäß dem ausgewählten Teilrezept bearbeitet werden (Schritt 26). Anschließend kann das bearbeitete Teilkabel aus der Kabelbearbeitungsmaschine, insbesondere dem Bearbeitungsraum, ausgeführt werden (Schritt S40). Das zweite Teilkabel der Kabelanordnung kann nun in die Kabelbearbeitungsmaschine eingeführt werden (Schritt S10).

In einer Ausführungsform kann vorgesehen sein, dass wenn anhand der Farbe und des zusätzlichen Zusatzzuordnungsparameters kein Teilrezept auswählbar ist, eine Ausgabe generiert werden kann und der Nutzer das Teilkabel auswählen kann (Schritt S226), so dass dies weiterbearbeitete werden kann. Beispielsweise können über ein Display die Teilrezepte und/oder Teilkabel angezeigt werden, die anhand der Farbe und des zusätzlichen Zusatzzuordnungsparameters ermittelt werden konnten. Der Nutzer kann aus diesen angezeigten Teilrezepte und/oder angezeigten Teilkabeln auswählen.

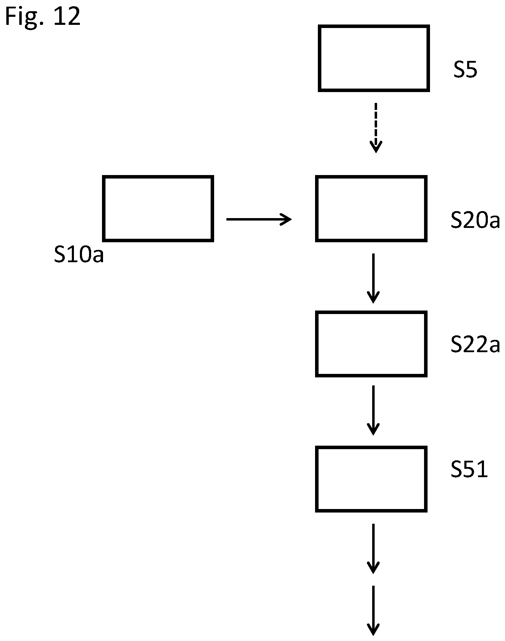

In Figur 12 sind beispielhafte Schritte einer Methode illustriert, wenn kein Bearbeitungsrezept ausgewählt wurde. Mehrere Bearbeitungsrezepte können bereitgestellt werden (Schritt S5). Ein charakteristisches Teilkabel kann in die Kabelbearbeitungsvorrichtung eingeführt werden (Schritt S10a) und die Farbe detektiert werden (S20a). Das charakteristische Teilkabel kann zugeordnet werden (Schritt S22a). Aus der Vielzahl der Bearbeitungsrezepte kann das Bearbeitungsrezept ausgewählt werden, das ein Teilrezept für ein Teilkabel der detektierten Farbe aufweist (S51). Anschließend können die Teilkabel bearbeitet entsprechend den Teilrezepten des Bearbeitungsrezeptes bearbeitet werden beispielsweise wie in den Figuren 10 und 11 illustriert.

In einer Ausführungsform kann das Bearbeitungsrezept für die vorgegebene Anwendung aus der Vielzahl an Bearbeitungsrezepten auswählbar sein, bevor das erste Teilkabel der Kabelanordnung in die Kabelbearbeitungsvorrichtung eingeführt wird.

Das Bearbeitungsrezept für die vorgegebene Anwendung kann aus der Vielzahl an Bearbeitungsrezepten durch den Nutzer über eine Benutzerschnittstelle auswählbar sein.

In einer Ausführungsform kann die Kabelbearbeitungsvorrichtung derart ausgebildet sein, eine Vorauswahl möglicher Bearbeitungsrezepte auszuwählen. Das Bearbeitungsrezept für die vorgegebene Anwendung kann aus der Vorauswahl an Bearbeitungsrezepten durch den Nutzer über eine Benutzerschnittstelle auswählbar sein.

Die Kabelbearbeitungsvorrichtung kann dazu eingerichtet sein, die Vorauswahl möglicher Bearbeitungsrezepte anhand der Sensorinformation des ersten zugeführten Teilkabels vorzunehmen. Dazu kann die Sensorinformation des ersten zugeführten Teilkabels mit den Farbeinträgen einer Vielzahl, insbesondere aller gespeicherten Bearbeitungsrezepte, verglichen werden. Die Kabelbearbeitungsvorrichtung kann dazu ausgebildet sein, nur die Bearbeitungsrezepte dem Nutzer zur Auswahl bereitzustellen, für die ein Teilrezept für das erste zugeführte Teilkabel auswählbar ist.

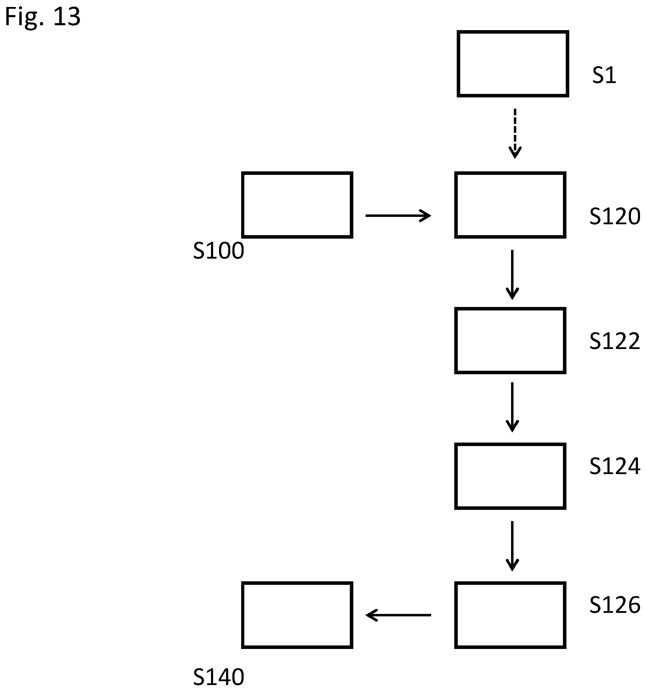

In Figur 13 ist eine beispielhafte Abfolge von Schritten zur Bearbeitung einer Kabelanordnung dargestellt.

Das Bearbeitungsrezept kann für die vorgegebene Anwendung im Schritt S1 ausgewählt werden. Im Schritt S100 können alle Teilkabel der Kabelanordnung in die Kabelbearbeitungsmaschine eingeführt werden. Die Farben und Positionen können im Schritt S120 erkannt werden und die entsprechenden Teilkabel zugeordnet werden (Schritt S122). Entsprechend den zugeordneten Teilkabeln können die zugehörigen Teilrezepte ausgewählt werden (Schritt S124). Die Teilkabel können durch das Bearbeitungswerkzeug gemäß den ausgewählten Teilrezepten bearbeitet werden (Schritt 126). Anschließend kann die bearbeitete Kabelanordnung aus der Kabelbearbeitungsmaschine (Schritt S140).

## Patentansprüche

1. Eine Kabelbearbeitungsvorrichtung (100) zum Bearbeiten einer Kabelanordnung (26) mit einer Mehrzahl von Teilkabeln (25) für eine vorgegebene Anwendung, wobei jedes der Teilkabel (25) ein jeweiliges Teilkabel-spezifische Farbe aufweist, wobei die Kabelbearbeitungsvorrichtung (100) aufweist:
- ein Bearbeitungswerkzeug (250) zum sequenziellen Ausführen jeweiliger Bearbeitungsschritte an den Teilkabeln (25),
- einen optischen Sensor (22), wobei der optische Sensor zum Detektieren der jeweiligen Farbe eines dem Bearbeitungswerkzeug (250), insbesondere in eine Bearbeitungsposition, zugeführten Teilkabels (25) aus der Mehrzahl der Teilkabel (25) ausgebildet ist, und
- eine Steuerung (200) zum Steuern des Bearbeitungswerkzeuges, wobei die Steuerung (200) aufweist:
- eine Speichereinheit (210), in der mindestens ein Bearbeitungsrezept für die Bearbeitung der Kabelanordnung (26) gespeichert ist, wobei das Bearbeitungsrezept eine Mehrzahl Teilrezepte mit jeweils mindestens einem Bearbeitungsschritt enthält, wobei jedem Teilkabel (25) ein jeweiliges Teilrezept zugeordnet ist und wobei die Teilrezepte einen den Bearbeitungsschritt parametrisierenden Bearbeitungsparameter enthalten,
- eine Zuordnungseinheit (220), wobei die Zuordnungseinheit (220) mit dem optischen Sensor (22) verbunden ist, um eine Sensorinformation bezüglich der detektierten Farbe zu empfangen, in Abhängigkeit der empfangenen Sensorinformation das dem Bearbeitungswerkzeug (250), insbesondere der Bearbeitungsposition, zugeführte Teilkabel (25) zu erkennen, und das dem zugeführten Teilkabel (25) zugeordnete Teilrezept auszuwählen, und
- eine Befehlseinheit (230), wobei die Befehlseinheit (230) mit der Zuordnungseinheit (220) gekoppelt ist, um den Bearbeitungsschritt des ausgewählten Teilrezeptes zu empfangen, und mit dem Bearbeitungswerkzeug (250) gekoppelt ist, um das Bearbeitungswerkzeug (250) zum Ausführen des Bearbeitungsschrittes des ausgewählten Teilrezeptes an dem erkannten zugeführten Teilkabel (25) zu steuern.

2. Kabelbearbeitungsvorrichtung (100) gemäß Anspruch 1, wobei die Steuerung (200), insbesondere die Zuordnungseinheit (220), dazu ausgebildet ist,
einem ersten Teilkabel (25) ein erstes Teilrezept zuzuordnen vor der Zuordnung eines zweiten Teilrezeptes zu einem zweiten Teilkabel (25), wenn das erste Teilkabel (25) vor dem zweiten Teilkabel (25) in dem Bearbeitungswerkzeug (250), insbesondere in der Bearbeitungsposition, angeordnet ist, und
dem zweiten Teilkabel (25) das zweite Teilrezept zuzuordnen vor der Zuordnung des ersten Teilrezeptes zu dem ersten Teilkabel (25), wenn das zweite Teilkabel (25) vor dem ersten Teilkabel i(25) n dem Bearbeitungswerkzeug (250), insbesondere in der Bearbeitungsposition, angeordnet ist.

3. Kabelbearbeitungsvorrichtung (100) gemäß Anspruch 2, wobei die Steuerung (200), insbesondere die Zuordnungseinheit (220) dazu ausgebildet ist,
das erste Teilrezept vor dem zweiten Teilrezept auszuwählen, wenn das erste Teilkabel (25) vor dem zweiten Teilkabel (25) in dem Bearbeitungswerkzeug (250), insbesondere in der Bearbeitungsposition, angeordnet ist, und
das zweite Teilrezept vor dem ersten Teilrezept auszuwählen, wenn das zweite Teilkabel (25) vor dem ersten Teilkabel (25) in dem Bearbeitungswerkzeug (250), insbesondere in der Bearbeitungsposition, angeordnet ist.

4. Kabelbearbeitungsvorrichtung (100) gemäß einem der Ansprüche 1 bis 3, wobei die Kabelbearbeitungsvorrichtung (100) dazu ausgebildet ist
ein erstes Teilkabel (25) mit einer ersten Farbe vor einem zweiten Teilkabel mit einer zweiten Farbe zu bearbeiten, wenn die erste Farbe vor der zweiten Farbe detektiert wird, und
wobei die Kabelbearbeitungsvorrichtung (100) dazu ausgebildet ist, das zweite Teilkabel (25) vor dem ersten Teilkabel (25) zu bearbeiten, wenn die zweite Farbe vor der ersten Farbe detektiert wird,
insbesondere das erste Teilkabel (25) gemäß dem ersten Teilrezept und das zweite Teilkabel (25) gemäß dem zweiten Teilrezept zu bearbeiten.

5. Kabelbearbeitungsvorrichtung (100) gemäß einem der Ansprüche 1 bis 4, wobei der Bearbeitungsparameter ein Rohmaterialparameter ist, der zumindest eine Eigenschaft des Teilkabels (25) betrifft, insbesondere wobei der Rohmaterialparameter ein Farbparameter, ein Leiteraufbau, ein Manteldurchmesser und/oder ein Leiterdurchmesser ist,
und/oder
wobei der Bearbeitungsparameter ein Verfahrensparameter ist, der zumindest eine allgemeine Bearbeitungseigenschaft des Teilkabels (25) betrifft, insbesondere wobei der Verfahrensparameter ein Abzugsdurchmesser, ein Einschnittsdurchmesser, eine Geschwindigkeit und/oder eine Beschleunigung ist.

6. Kabelbearbeitungsvorrichtung (100) gemäß einem der Ansprüche 1 bis 5, wobei der Bearbeitungsparameter ein Applikationsparameter ist, der zumindest eine anwendungsspezifische Bearbeitungseigenschaft des Teilkabels (25) betrifft, insbesondere wobei der Applikationsparameter eine Abisolierlänge, eine Abziehlänge und/oder eine Markierung ist.

7. Kabelbearbeitungsvorrichtung (100) gemäß einem der Ansprüche 1 bis 6, wobei die Zuordnungseinheit (220) dazu ausgebildet ist, einen Vergleich zwischen der empfangenen Sensorinformation und den Farbeinträgen der Teilrezepte durchzuführen, insbesondere wobei der Vergleich über eine Berechnung der Abweichung, insbesondere über die kleinste quadratische Abweichung erfolgt.

8. Kabelbearbeitungsvorrichtung (100) gemäß Anspruch 7, wobei die Zuordnungseinheit (220) dazu ausgebildet ist,
- wenn der Vergleich für einen der Farbeinträge eine Übereinstimmungsbedingung erfüllt, das zu diesem Farbeintrag zugehörige Teilrezept auszuwählen und der Befehlseinheit (230) bereitzustellen, und
- wenn der Vergleich die Übereinstimmungsbedingung nicht erfüllt, die Zuordnungseinheit (220) eine Mitteilung generiert, wobei die Kabelbearbeitungsvorrichtung (100) eine Benutzerausgabe aufweist, die zur Ausgabe der Mitteilung eingerichtet ist.

9. Kabelbearbeitungsvorrichtung (100) gemäß einem der Ansprüche 1 bis 8, wobei die Kabelbearbeitungsvorrichtung (100) einen Kabelgreifer (24) umfasst, wobei die Kabelbearbeitungsvorrichtung (100) dazu ausgebildet ist, einen Zustellwinkel des Kabelgreifers (24) zu detektieren und anhand des detektierten Zustellwinkels einen Isolationsdurchmesser eines gegriffenen Teilkabels (25) zu bestimmen.

10. Kabelbearbeitungsvorrichtung (100) gemäß einem der Ansprüche 1 bis 9, wobei die Kabelbearbeitungsvorrichtung (100) dazu eingerichtet ist, einen Leiterdurchmesser eines elektrischen Leiters des dem Bearbeitungswerkzeug zugeführten Teilkabels zu detektieren, insbesondere über eine Messer-Leiter-Berührungsdetektion.

11. Kabelbearbeitungsvorrichtung (100) gemäß einem der Ansprüche 1 bis 10, wobei die Kabelbearbeitungsvorrichtung (100) zur Bestimmung eines Zusatzzuordnungsparameters ausgebildet ist, wobei das Teilrezept einen Zusatzzuordnungsparametereintrag enthält, wobei die Steuerung (200) dazu ausgebildet ist, eine Teilmenge an Teilkabeln (25) anhand der Sensorinformation des optischen Sensors (22) zu erkennen und die zugehörige Teilmenge an Teilrezepten auszuwählen, und das der Bearbeitungsposition zugeführte Teilkabel (25) in Abhängigkeit des bestimmten Zusatzzuordnungsparameters aus der Teilmenge der Teilkabel (25) zu erkennen und das zugeordnete Teilrezept auszuwählen, insbesondere wobei der Zusatzzuordnungsparameter der Isolationsdurchmesser und/oder der Leiterdurchmesser ist.

12. Kabelbearbeitungsvorrichtung (100) gemäß einem der Ansprüche 1 bis 11, wobei der optische Sensor (22) einen Farbsensor (22a) und eine Beleuchtungseinheit (22b), insbesondere eine weiße Leuchtdiode, aufweist, wobei der optische Sensor (22) einen Lichtleiterkopf mit zwei voneinander getrennten optischen Fasern aufweist, insbesondere wobei eine zentrale optische Faser das Licht zum Farbsensor führt und wobei ringförmig um die zentrale Faser angeordnete optische Fasern das Licht von der Beleuchtungseinheit zum Kopf führen.

13. Kabelbearbeitungsvorrichtung (100) gemäß einem der Ansprüche 1 bis 12, wobei das Bearbeitungswerkzeug (250) zur Aufnahme einer Vielzahl an Teilkabeln (25) ausgebildet sein, wobei die Kabelbearbeitungsvorrichtung (100) einen Separator (55) aufweist, in dem jedes der Teilkabel (25) in einer jeweiligen Position positionierbar ist, wobei der optische Sensor (22) dazu ausgebildet ist, die jeweiligen Farbe der Teilkabel (25) zu detektieren, wobei die Kabelbearbeitungsvorrichtung (100) eine Positionseinheit aufweist, über die eine relative Position zwischen dem optischen Sensor (22) und dem Separator (55), insbesondere in einer Querrichtung, bestimmbar ist.

14. Eine Methode zum Bearbeiten einer Kabelanordnung (26) mit der Kabelbearbeitungsvorrichtung (100) nach einem der Ansprüche 1 bis 13, wobei die Methode aufweist:
- einen Zuführschritt, in dem ein Teilkabel (25) dem Bearbeitungswerkzeug (250), insbesondere in die Bearbeitungsposition, zugeführt wird,
- einen Detektionsschritt, im dem die Farbe des Teilkabels (25) durch den optischen Sensor (22) detektiert wird,
- einen Erkennungsschritt, im dem das Teilkabel (25) anhand der Sensorinformation bezüglich der detektierten Farbe erkannt wird,
- einen Zuordnungsschritt, in dem das dem erkannten Teilkabel (25) zugeordnete Teilrezept ausgewählt wird,
- einen Ausführungsschritt, in dem das erkannte Teilkabel (25) gemäß dem ausgewählten Teilrezept bearbeitet wird.

15. Methode gemäß Anspruch 14, wobei die Methode weiterhin aufweist:
- einen weiteren Zuführschritt, in dem ein zweites Teilkabel (25) dem Bearbeitungswerkzeug (250), insbesondere in die Bearbeitungsposition, zugeführt wird,
- einen weiteren Detektionsschritt, im dem die Farbe des zweiten Teilkabels (25) durch den optischen Sensor (22) detektiert wird,
- einen weiteren Erkennungsschritt, im dem das zweite Teilkabel (25) anhand der Sensorinformation bezüglich der detektierten Farbe erkannt wird,
- einen weiteren Zuordnungsschritt, in dem das dem erkannten zweite Teilkabel (25) zugeordnete zweite Teilrezept ausgewählt wird,
- einen weiteren Ausführungsschritt, in dem das erkannte zweite Teilkabel (25) gemäß dem ausgewählten zweiten Teilrezept bearbeitet wird.
